# FASCICULE DE BREVET EUROPEEN

(11) **EP 1 456 215 B1**
(45) Date de publication et mention de la délivrance du brevet: **09.08.2006**
(21) Numéro de dépôt: 02801153.4
(22) Date de dépôt: 19.12.2002
(51) Int. Cl.: C07F 7/18, C08L 23/00, C08K 5/00

(54) **COMPOSES ORGANOSILICIQUES, COMPOSITIONS D'ELASTOMERE ET ARTICLES**
ORGANOSILIZIUMVERBINDUNGEN, ELASTOMERZUSAMMENSETZUNGEN UND ARTIKEL
ORGANOSILICON COMPOUNDS, ELASTOMER COMPOSITIONS AND ARTICLES

(30) Priorité: 20.12.2001 FR 0116507
(43) Date de publication de la demande: 15.09.2004
(73) Titulaire: RHODIA CHIMIE, 92512 Boulogne-Billancourt (FR)
(72) Inventeur: GUENNOUNI, Nathalie, F-69540 Irigny (FR); MIGNANI, Gérard, F-69008 Lyon (FR); KIRSCH, Gilbert, F-57140 Norroy le Veneur (FR); STELANDRE, Laurence, F-59800 Lille (FR)
(74) Mandataire: Delenne, Marc
(86) Numéro de dépôt international: PCT/FR2002/004451
(87) Numéro de publication internationale: WO 2003/053983

(56) Documents cités:
- EP-A- 0 074 632
- FR-A- 2 206 330

## Description

L'invention concerne de nouveaux composés organosiliciques, leurs procédés de préparation, leur utilisation comme agent de couplage charge blanche-élastomère dans les compositions de caoutchouc comprenant une charge blanche, notamment une matière siliceuse, à titre de charge renforçante. L'invention vise également les compositions de caoutchouc contenant un tel agent de couplage et les articles à base d'une de ces compositions.

Les agents de couplage de l'invention sont particulièrement utiles dans la préparation d'articles en élastomères soumis à des contraintes variées telles qu'une variation de température, une variation de sollicitation de fréquence importante en régime dynamique, une contrainte statique importante ou une fatigue en flexion importante en régime dynamique. Des exemples d'articles de ce type sont des bandes de convoyeur, des courroies de transmission de puissance, des tuyaux flexibles, des joints de dilatation, des joints d'appareils électroménagers, des supports jouant le rôle d'extracteurs de vibrations de moteurs soit avec des armatures métalliques, soit avec un fluide hydraulique à l'intérieur de l'élastomère, des câbles, des gaines de câbles, des semelles de chaussures et des galets pour téléphériques.

Des compositions d'élastomères appropriées à la préparation de tels articles doivent présenter les propriétés suivantes :
- des propriétés rhéologiques marquées par des viscosités les plus faibles possibles pour une grande facilité de mise en oeuvre des mélanges crus préparés, en particulier au niveau des opérations d'extrusion et de calandrage ;
- des temps de vulcanisation les plus courts possibles pour atteindre une excellente productivité de l'installation de vulcanisation ;
- d'excellentes propriétés de renforcement conférées par une charge, en particulier des valeurs optimales de module d'élasticité en traction, de résistance à la rupture en traction et de résistance à l'abrasion.

Pour atteindre un tel objectif, de nombreuses solutions ont été proposées qui se sont essentiellement concentrées sur l'utilisation d'élastomère(s) modifiés avec une charge renforçante. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où la charge présente une très bonne aptitude d'une part à s'incorporer dans la matrice lors du mélange avec le (ou les) élastomère(s) et à se désagglomérer, et d'autre part, à se disperser de façon homogène dans la matrice élastomère.

De manière connue, le noir de carbone est une charge qui présente de telles aptitudes, mais ce n'est pas le cas en général pour les charges blanches. L'usage de charge blanche renforçante seule, notamment de silice renforçante seule, s'est révélé inapproprié en raison du faible niveau de certaines propriétés de telles compositions et par voie de conséquence de certaines propriétés des articles mettant en oeuvre ces compositions. Pour des raisons d'affinités réciproques, les particules de charge blanche, notamment de silice, ont une fâcheuse tendance, dans la matrice élastomère, à s'agglomérer entre elles. Ces interactions charge/charge ont pour conséquence néfaste de limiter la dispersion de la charge et donc de limiter les propriétés de renforcement à un niveau sensiblement inférieur à celui qu'il serait théoriquement possible d'atteindre si toutes les liaisons (charge blanche-élastomère) susceptibles d'être créées pendant l'opération de mélange, étaient effectivement obtenues. De surcroît, ces interactions tendent aussi à augmenter la viscosité à l'état cru des compositions élastomères, et donc à rendre leur mise en oeuvre plus difficile qu'en présence de noir de carbone.

Il est connu de l'homme de l'art qu'il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de couplage (charge blanche-élastomère), on entend de manière connue un agent apte à établir une connexion suffisante, de nature chimique et/ou physique, entre la charge blanche et l'élastomère ; un tel agent de couplage, au moins bifonctionnel, a par exemple comme formule générale simplifiée " Y-B-X ", dans laquelle:
- Y représente un groupe fonctionnel (fonction Y) qui est capable de se lier physiquement et/ou chimiquement à la charge blanche, une telle liaison pouvant être établie, par exemple, entre un atome de silicium de l'agent de couplage et les groupes hydroxyles (OH) de surface de la charge blanche (par exemple les silanols de surface lorsqu'il s'agit de silice) ;
- X représente un groupe fonctionnel (fonction X) capable de se lier physiquement et/ou chimiquement à l'élastomère, par exemple par l'intermédiaire d'un atome de soufre ;
- B représente un groupe organique divalent permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais sont dépourvus de la fonction X active vis-à-vis de l'élastomère.

Des agents de couplage, notamment silice-élastomère, ont été décrits dans un grand nombre de documents, les plus utilisés étant des alkoxysilanes bifonctionnels porteurs d'un groupe trialkoxy à titre de fonction Y et, à titre de fonction X, d'un groupe capable de réagir avec l'élastomère tel que notamment un groupe fonctionnel soufré.

Ainsi, il a été proposé dans la demande de brevet FR-A-2 094 859, d'utiliser un mercaptoalkoxysilane pour augmenter l'affinité de la silice avec la matrice élastomère. Il a été mis en évidence et il est aujourd'hui bien connu que les mercaptoalkoxysilanes, et en particulier le γ-mercaptopropyltriméthoxysilane, sont susceptibles de procurer d'excellentes propriétés de couplage silice-élastomère, mais que l'utilisation industrielle de ces agents de couplage n'est pas possible en raison de la forte réactivité du groupe ― SH (fonction X) conduisant très rapidement au cours de la préparation de la composition d'élastomère(s) de type caoutchouc dans un mélangeur interne à des réactions de réticulation pendant le mélangeage, appelées encore "grillage" ("scorching"), à des viscosités élevées, en fin de compte à des compositions quasiment impossibles à travailler et à mettre en oeuvre industriellement. Pour illustrer cette impossibilité d'utiliser industriellement de tels agents de couplage et les compositions de caoutchouc les contenant, on peut citer les documents FR-A-2 206 330, US-A-4 002 594 et US-A-3 873 489.

Pour remédier à cet inconvénient, il a été proposé de remplacer ces mercaptoalkoxysilanes par des alkoxysilanes polysulfurés, notamment des polysulfures de bis-trialkoxyl(C₁-C₄)silylpropyle tels que décrits dans de nombreux brevets ou demandes de brevets (voir par exemple FR-A-2 149 339, FR-A-2 206 330, US-A-3 842 111, US-A-3 873 489, US-A-3 997 581). Parmi ces polysulfures, on citera notamment le tétrasulfure de bis 3-triéthoxysilylpropyle (en abrégé TESPT) qui est généralement considéré aujourd'hui comme le produit apportant, pour des vulcanisats chargés à la silice, le meilleur compromis en terme de sécurité au grillage, de facilité de mise en oeuvre et de pouvoir renforçant.

Or, de manière inattendue, la Demanderesse a découvert lors de ses recherches que des agents de couplage spécifiques peuvent présenter des performances de couplages supérieures à celles des alkoxysilanes polysulfurés, notamment à celles du TESPT, dans les compositions de caoutchouc. Ces agents de couplage sont des composés organosiliciques comportant, par molécule, liés à des atomes de silicium, d'une part au moins un groupe hydroxyle ou un groupe monovalent hydrolysable (noté fonction Y) et d'autre part, et il s'agit là de l'une des caractéristiques essentielles des composés organosiliciques selon la présente invention, au moins un groupe fonctionnel polythiosulfénamide particulier (noté fonction X). Ces agents de couplage ne posent pas par ailleurs les problèmes précités de grillage prématuré et ceux de mise en oeuvre liés à une viscosité trop importante des compositions de caoutchouc à l'état cru, inconvénients posés notamment par les mercaptoalkoxysilanes.

### PREMIER OBJET DE L'INVENTION

En conséquence, un premier objet de l'invention concerne un nouveau composé organosilicique comportant, par molécule, liés à des atomes de silicium, d'une part une fonction Y consistant dans au moins un groupe hydroxyle ou un groupe monovalent hydrolysable, et d'autre part une fonction X capable de réagir avec un élastomère caoutchouc, ledit composé organosilicique étant caractérisé en ce que la fonction X consiste dans au moins un groupe fonctionnel polythiosulfénamide de formule : 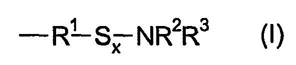 dans laquelle :
■ la valence libre est liée à un atome de silicium du composé organosilicique ;
■ le symbole R¹ représente un radical divalent choisi parmi : un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome d'azote portant 1 à 2 groupes monovalents choisis parmi : un atome d'hydrogène ; un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ;
■ x est un nombre entier ou fractionnaire, allant de 2 à 4 ;
■ l'un des substituants de l'atome d'azote, R² ou R³, représente : un atome d'hydrogène ; un groupe hydrocarboné aliphatique saturé ; un groupe carbocyclique saturé et/ou aromatique, monocyclique ou polycyclique ; ou un groupe présentant une partie hydrocarbonée aliphatique saturée et une partie carbocyclique saturée et/ou aromatique, monocyclique ou polycyclique ;
■ l'autre substituant de l'atome d'azote, respectivement R³ ou R², représente : un groupe hydrocarboné aliphatique saturé ayant au moins 3 atomes de carbone ; un groupe carbocyclique saturé et/ou aromatique, monocyclique ou polycyclique ; ou un groupe présentant une partie hydrocarbonée aliphatique saturée comportant un nombre quelconque d'atomes de carbone et une partie carbocyclique saturée et/ou aromatique, monocyclique ou polycyclique;
■ les substituants R² et R³ peuvent, en outre, former ensemble et avec l'atome d'azote auquel ils sont liés, un cycle unique ayant de 5 à 7 chaînons, comportant dans le cycle 3 à 6 atomes de carbones, au moins 1 atome d'azote et éventuellement 1 ou 2 double(s) liaison(s) insaturée(s).

Dans le présent mémoire, on précisera que le symbole x de la formule (I) est un nombre, entier ou fractionnaire, qui représente le nombre d'atomes de soufre présents dans une molécule du groupe de formule (I). Ce nombre peut être un nombre exact d'atomes de soufre dans le cas où la voie de synthèse du groupe considéré ne peut donner naissance qu'à une seule sorte de groupe polysulfuré. Mais ce nombre peut être la moyenne du nombre d'atomes de soufre par molécule du groupe considéré, dans la mesure où la voie de synthèse choisie donne naissance à un mélange de groupes polysulfurés ayant chacun un nombre d'atomes de soufre différent ; dans ce cas, le groupe polythiosulfénamide synthétisé est en fait constitué d'une distribution de polysulfures, allant du disulfure S₂ à des polysulfures plus lourds, centrée sur une valeur moyenne en mole (valeur du symbole x) se situant dans le domaine général indiqué (x allant de 2 à 4).

Dans ce qui précède, par groupe hydrocarboné aliphatique, on entend un groupe linéaire ou ramifié, de préférence comprenant de 1 à 25 atomes de carbone, éventuellement substitué.

Avantageusement, ledit groupe hydrocarboné aliphatique comprend de 1 à 12 atomes de carbone, mieux de 1 à 8 atomes de carbone et mieux encore de 1 à 6 atomes de carbone.

A titre de groupe hydrocarboné aliphatique saturé, on peut citer les groupes alkyle, tels que les radicaux méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle.

Les groupes hydrocarbonés aliphatiques insaturés comprennent une ou plusieurs insaturations, de préférence une, deux ou trois insaturations de type éthylénique (double liaison) ou/et acétylénique (triple liaison).

Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Dans le cadre de l'invention, on entend par groupe carbocyclique, un radical monocyclique ou polycyclique, éventuellement substitué, de préférence en C₃-C₅₀. De façon avantageuse, il s'agit d'un radical en C₃-C₁₈, de préférence mono-, bi- ou tricyclique. Lorsque le groupe carbocyclique comprend plus d'un noyau cyclique (cas des carbocycles polycycliques), les noyaux cycliques sont condensés deux à deux. Deux noyaux condensés peuvent être orthocondensés ou péricondensés.

Le groupe carbocyclique peut comprendre, sauf indications contraires, une partie saturée et/ou une partie aromatique et/ou une partie insaturée.

Des exemples de groupes carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbornyle.

Le carbocycle insaturé ou toute partie insaturée de type carbocyclique présente une ou plusieurs insaturations éthyléniques, de préférence une, deux ou trois. Il présente avantageusement de 6 à 50 atomes de carbone, mieux encore de 6 à 20, par exemple de 6 à 18. Des exemples de carbocycles insaturés sont les groupes cycloalcényles en C₆-C₁₀.

Des exemples de radicaux carbocycliques aromatiques sont les groupes (C₆-C₁₈)aryles, mieux encore (C₆-C₁₂)aryles et notamment phényle, naphtyle, anthryle et phénanthryle.

Un groupe présentant à la fois une partie aliphatique hydrocarbonée telle que définie ci-dessus et une partie carbocyclique telle que définie ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alcoxy dans lesquels la partie alkyle est préférablement telle que définie ci-dessus.

Par groupe monovalent hydrolysable dont on a parlé supra à propos de la fonction Y, on entend des groupes tels que, par exemple : les atomes d'halogène, notamment le chlore ; les groupes -O-G¹ et -O-CO-G¹ où G¹ représente : un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus, G¹ pouvant être éventuellement halogéné et/ou substitué par un ou plusieurs alcoxy ; les groupes -O-N=CG⁵G⁶ dans lesquels G⁵ et G⁶ prennent indépendamment l'une quelconque des significations données ci-dessus pour G¹, G⁵ et G⁶ pouvant être halogénés ou/et éventuellement substitués par un ou plusieurs alcoxy ; les groupes -O-NG⁵G⁶ dans lesquels G⁵ et G⁶ sont tels que définis ci-dessus.

Avantageusement, pareil groupe monovalent hydrolysable est un radical : alcoxy, linéaire ou ramifié, en C₁-C₈ éventuellement halogéné et/ou éventuellement substitué par un ou plusieurs (C₁-C₈)alcoxy ; acyloxy en C₂-C₉ éventuellement halogéné ou éventuellement substitué par un ou plusieurs (C₁-C₈)alcoxy ; cycloalkyloxy en C₅-C₁₀ ; ou aryloxy en C₆-C₁₈. A titre d'exemple, le groupe hydrolysable est méthoxy, éthoxy, n-propoxy, isopropoxy, n-butoxy, méthoxyméthoxy, éthoxyéthoxy, méthoxyéthoxy, β-chloropropoxy ou β-chloroéthoxy ou bien encore acétoxy.

Comme cycles uniques que peuvent former ensemble les substituants R² et R³ de l'atome d'azote présent dans la formule (I), on citera par exemple les cycles suivants où la valence libre portée par un atome d'azote est liée au groupe Sₓ : le pyrrole, l'imidazole, le pyrazole, la pyrrolidine, la Δ2-pyrroline, l'imidazolidine, la Δ2-imidazoline, la pyrazolidine, la Δ3-pyrazoline, la pipéridine ; des exemples préférés sont : le pyrrole, l'imidazole et le pyrazole.

Selon un mode particulièrement adapté de réalisation de l'invention, le groupe polythiosulfénamide répond à la formule (I) dans laquelle :
■ R¹ représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ x est un nombre, entier ou fractionnaire, allant de 2 à 4 ;
■ R² (ou R³) représente : un atome d'hydrogène ; un radical alkyle, linéaire ou ramifié, en C₁-C₈ ; un radical cycloalkyle en C₅-C₁₀ ; un radical aryle en C₆-C₁₈ ; ou un radical (C₆-C₁₈)aryl-(C₁-C₈)alkyle ;
■ R³ (ou R²) représente : un radical alkyle, linéaire ou ramifié, en C₃-C₈ ; un radical cycloalkyle en C₅-C₁₀, un radical aryle en C₆-C₁₈, ou un radical (C₆-C₁₈)aryl-(C₁₋C₈)alkyle,
■ R² et R³ peuvent, en outre, former ensemble et avec l'atome auquel ils sont liés, un cycle unique choisi parmi le pyrrole, l'imidazole et le pyrazole. Selon un mode plus particulièrement adapté de réalisation de l'invention, le groupe polythiosulfénamide répond à la formule (I) dans laquelle :

■ R¹ représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ x est un nombre, entier ou fractionnaire, allant de 2 à 4 ;
■ R² (ou R³) représente chacun : un atome d'hydrogène ; un radical alkyle, linéaire ou ramifié, en C₁-C₈ ; un radical cycloalkyle en C₅-C₁₀ ; ou un radical (C₆-C₁₂)aryl-(C₁-C₈)alkyle ;
■ R³ (ou R²) représente : un radical alkyle, linéaire ou ramifié, en C₃-C₈ ; un radical cycloalkyle en C₅-C₁₀ ; ou un radical (C₆-C₁₂)aryl-(C₁-C₈)alkyle.

Selon un mode encore plus particulièrement adapté de réalisation de l'invention, le groupe polythiosulfénamide répond à la formule (I) dans laquelle :
■ R¹ représente une chaîne alkylène en C1-C8 ;
■ x est un nombre, entier ou fractionnaire, allant de 2 à 3 ;
■ le symbole R² (ou R³) est choisi dans le groupe formé par l'hydrogène, les radicaux méthyle, éthyle, propyle, isopropyle, n-butyle, isobutyle, t-butyle, pentyle, hexyle, cyclohexyle, et benzyle ;
■ le symbole R³ (ou R²) est choisi dans le groupe formé par les radicaux propyle, isopropyle, n-butyle, isobutyle, t-butyle, pentyle, hexyle, cyclohexyle et benzyle. Selon un mode tout spécialement adapté de réalisation de l'invention, le groupe polythiosulfénamide répond à la formule (I) dans laquelle :

■ le symbole R¹ est choisi dans le groupe formé par les radicaux divalents méthylène, éthylène et propylène ;
■ x est un nombre égal à 2 ;
■ le symbole R² (ou R³) est choisi dans le groupe formé par l'hydrogène, les radicaux méthyle, éthyle, propyle, isopropyle, cyclohexyle et benzyle ;
■ le symbole R³ (ou R²) est choisi dans le groupe formé par les radicaux propyle, isopropyle, cyclohexyle et benzyle.

Les composés organosiliciques considérés dans la présente invention consistent notamment dans un silane et/ou dans un polyorganosiloxane polyfonctionnel. L'homme de métier comprendra que, par l'expression "silane polyfonctionnel", on entend définir un silane porteur d'une part d'une fonction Y consistant dans un, deux ou trois groupe(s) hydroxyle(s) ou groupe(s) monovalent(s) hydrolysable(s) relié(s) à un atome de silicium, et d'autre part d'une fonction X consistant dans un groupe polythiosulfénamide Sₓ-NR²R³ qui est relié à l'atome de silicium de la fonction Y par le groupe divalent de liaison R¹. L'homme de métier comprendra aussi que, par l'expression "polyorganosiloxane polyfonctionnel", on entend définir un polyorganosiloxane porteur, dans la chaîne et/ou en bout(s) de chaîne, à titre de fonction Y, d'au moins un motif siloxyle équipé d'un, deux ou trois groupe(s) OH ou groupe(s) monovalent(s) hydrolysable(s), et, à titre de fonction X, d'au moins un motif siloxyle équipé d'un groupe polythiosulfénamide Sₓ-NR²R³.

Sans que cette variante de réalisation de l'invention soit limitative, un groupe préféré de composés organosiliciques selon l'invention est constitué des silanes polyfonctionnels répondant à la formule générale (silanes dits SPF1) : 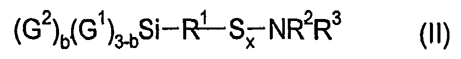 dans laquelle :
■ b représente un nombre choisi parmi 1, 2 et 3 ;
■ les symboles G¹, identiques ou différents, représentent chacun : un groupe hydrocarboné aliphatique, saturé ou insaturé ; un groupe carbocyclique, saturé, insaturé et/ou aromatique, monocyclique ou polycyclique ; ou un groupe présentant une partie hydrocarbonée aliphatique, saturée ou insaturée et une partie carbocyclique telle que définie ci-dessus ;
■ les symboles G², identiques ou différents, représentent chacun : un groupe hydroxyle ou un groupe monovalent hydrolysable ;
■ R¹, x, R² et R³ prennent les définitions générales données ci-avant à propos de la formule (I). Parmi les silanes polyfonctionnels préférés, ceux qui conviennent particulièrement bien, sont les silanes polyfonctionnels de formule (II) dans laquelle (silanes dits SPF2) :
■ R¹, x, R² et R³ prennent les définitions spécifiques données supra dans le "mode particulièrement adapté de réalisation de l'invention" ;
■ b représente un nombre choisi parmi 1, 2 et 3 ;
■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G², identiques ou différents, représentent chacun : un radical alkoxy, linéaire ou ramifié, en C₁-C₈, éventuellement substitué par un ou plusieurs (C₁-C₈)alkoxy.

Parmi les silanes polyfonctionnels préférés, ceux qui conviennent plus particulièrement bien, sont les silanes polyfonctionnels de formule (II) dans laquelle (silanes dits SPF3) :
■ R¹, x, R² et R³ prennent les définitions spécifiques données supra dans le "mode plus particulièrement adapté de réalisation de l'invention" ;
■ b représente un nombre choisi parmi 1, 2 et 3 ;
■ Les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈.
■ les symboles G², identiques ou différents, représentent chacun : un radical alkoxy, linéaire ou ramifié, en C₁-C₈, éventuellement substitué par un ou plusieurs (C₁-C₈)alkoxy.

Parmi les silanes préférés, ceux qui conviennent encore plus particulièrement bien, sont les silanes polyfonctionnels de formule (II) dans laquelle (silanes dits SPF4) :
■ R¹, x, R² et R³ prennent les définitions spécifiques données supra dans le "mode encore plus particulièrement adapté de réalisation de l'invention" ;
■ b représente un nombre choisi parmi 1, 2 et 3 ;
■ les symboles G¹, identiques ou différents, sont choisis dans le groupe formé par les radicaux méthyle, éthyle, propyle, isopropyle, cyclohexyle et phényle ;
■ les symboles G², identiques ou différents, sont choisis dans le groupe formé par les radicaux méthoxy, éthoxy, n-propoxy, isoproxy, méthoxyméthoxy, éthoxyéthoxy et méthoxyéthoxy.

Parmi les silanes préférés, ceux qui conviennent tout spécialement bien, sont les silanes polyfonctionnels de formule (II) dans laquelle (silanes dits SPF5) :
■ R¹, x, R² et R³ prennent les définitions spécifiques données supra dans le "mode tout spécialement adapté de réalisation de l'invention" ;
■ b représente un nombre égal à 3 ;
■ les symboles G², identiques, sont choisis dans le groupe formé par les radicaux méthoxy, éthoxy, n-propoxy et isopropoxy.

Comme silanes qui conviennent tout spécialement bien, on citera par exemple :
• la N-(3-triméthoxysilylpropyldisulfanyl)-bis(isopropyl)amine 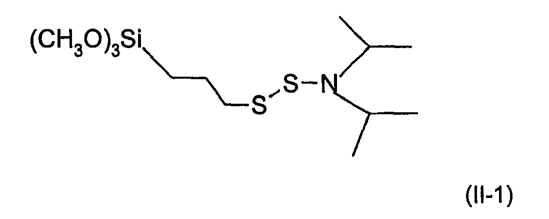
• la N-(3-triéthoxysilylpropyldisulfanyl)-bis(isopropyl)amine 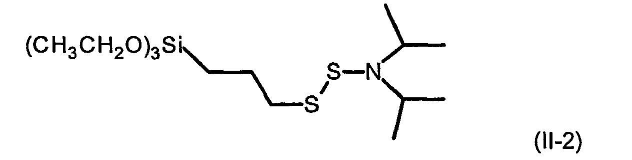
• la N-(3-triméthoxysilylpropyldisullfanyl)cyclohexylamine 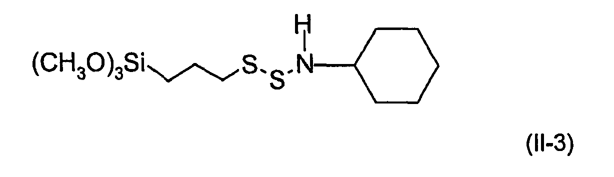
• la N-méthyl-N-(3-triéthoxysilylpropyldislfanyl)cyclohexylamine 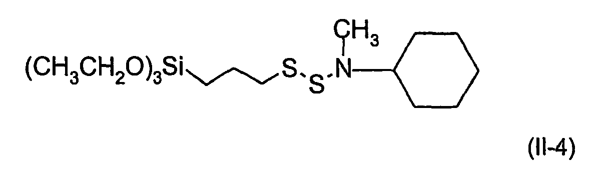
• la N-(3-triéthoxysilylpropyldisulfanyl)benzylamine 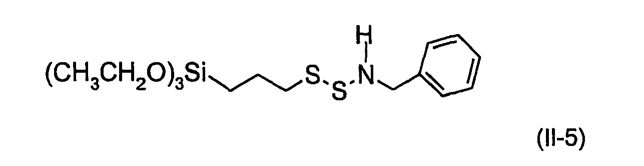
• la N-méthyl-N-3'-triméthoxysilylpropyldisulfanyl-benzylamine 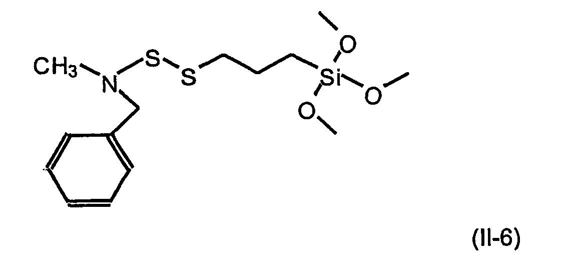
• la N-(3-éthoxydiméthylsilylpropyldisulfanyl)-bis(isopropyl)amine

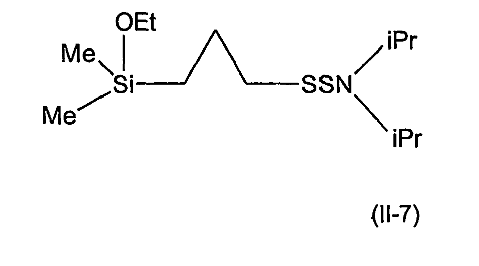

Comme autres silanes qui convienne tout spécialement bien, on citera les composés :
• la N-(3-méthoxydiméthylsilylpropyldisulfanyl)-bis(isopropyl)amine,
• la N-(3-diméthoxyméthylsilylpropyldisulfanyl)-bis(isopropyl)amine,
• la N-(3-diéthoxyméthylsilylpropyldisulfanyl)-bis(isopropyl)amine,
• la N-(3-méthoxydiméthylsilylpropyldisullfanyl)cyclohexylamine,
• la N-(3-diméthoxyméthylsilylpropyldisullfanyl)cyclohexylamine,
• la N-méthyl-N-(3-éthoxydiméthylsilylpropyldislfanyl)cyclohexylamine,
• la N-méthyl-N-(3-diéthoxyméthylsilylpropyldislfanyl)cyclohexylamine,
• la N-(3-éthoxydiméthylsilylpropyldisulfanyl)benzylamine,
• la N-(3-diéthoxyméthylsilylpropyldisulfanyl)benzylamine,
• la N-méthyl-N-3'-méthoxydiméthylsilylpropyldisulfanyl-benzylamine,
• la N-méthy-N-3'-diméthoxyméthylsilylpropyldisulfanyl-benzylamine.

### SECOND OBJET DE L'INVENTION

Les composés organosiliciques de l'invention peuvent être préparés, et ceci constitue le second objet de la présente invention, par mise en oeuvre de l'une des méthodes suivantes ou de méthodes apparentées.

### Méthode A

Les silanes polyfonctionnels de formule (II) où x = 2 peuvent être obtenus par réaction d'un halogénure de disulfure de formule :

(G²)_{b}(G¹)_{3-b}Si-R¹-S-S-Hal (III)

dans laquelle G², G¹, b et R¹ sont tels que définis ci-dessus et Hal représente un atome d'halogène, de préférence un atome de chlore, sur l'amine appropriée de formule :

HNR²R³ (IV)

dans laquelle R² et R³ sont tels que définis ci-dessus, en présence d'une base, de préférence une base organique.

Dans le cadre de l'invention, par atome d'halogène on entend un atome de brome, chlore, fluor ou iode.

Des bases appropriées sont, par exemple, la N-méthylmorpholine, la triéthylamine, la tributylamine, la diisopropyléthylamine, la dicyclohexylamine, la N-méthylpipéridine, la pyridine, la 4-(1-pyrrolidinyl)pyridine, la picoline, la 4-(N,N-diméthylamino)pyridine, la 2,6-di-t-butyl-4-méthylpyridine, la quinoléine, la N,N-diméthylaniline, la N,N-diéthylaniline, le 1,8-diazabicyclo[5.4.0]-undec-7-ène (DBU), le 1,5-diazabicyclo[4.3.0]-non-5-ène (DBN) et le 1,4-diazabicyclo[2.2.2]-octane (DABCO ou triéthylènediamine).

La réaction est préférablement mise en oeuvre dans un solvant aprotique polaire tel qu'un éther et, par exemple, l'éther de diéthyle, l'éther de diisopropyle, le tétrahydrofuranne, le dioxanne, le diméthoxyéthane ou l'éther diméthylique de diéthylèneglycol. L'éther de diéthyle est préféré.

La température réactionnelle est fonction de la réactivité des molécules en présence et de la force de la base utilisée. Cette température varie généralement entre - 78°C et la température ambiante (15 à 25°C).

De façon avantageuse, une température comprise entre -78°C et -50°C convient bien.

Puis, il est souhaitable de laisser le milieu revenir à température ambiante.

Lorsque l'amine (IV) est une amine secondaire (R² et R³ sont distincts de H), la réaction est stoechiométrique. Dans ce cas, le rapport molaire de l'amine (IV) à l'halogénure de disulfure (III) est compris entre 1 et 2, mieux encore entre 1 et 1,5.

Lorsque l'amine (IV) est primaire (R² ou R³ est H), alors la quantité mise en jeu dépend de la nature du produit réactionnel visé. En vue d'obtenir un composé de formule (II) dans lequel R² ou R³ représente H, l'amine (IV) sera en excès dans le milieu réactionnel. Le rapport molaire (IV)/(III) varie généralement entre 1 et 3, ce rapport étant généralement le plus proche de 1, par exemple choisi entre 1 et 1,2.

### Méthode B

Les silanes polyfonctionnels de formule (II) où x = 2 peuvent être obtenus par ailleurs par réaction d'un disulfure de formule :

(G²)_{b}(G¹)_{3-b}Si-R¹-S-S-J (V)

dans laquelle G², G¹, b, et R¹ sont tels que définis ci-dessus et J représente le groupe succinimido ou phtalimido éventuellement substitué, sur l'amine (IV) définie ci-dessus, en présence d'une base, de préférence une base organique.

Les substituants des groupes phtalimido et succinimido sont des substituants organiques compatibles avec la réaction mise en jeu, c'est-à-dire non réactifs dans les conditions opératoires mises en oeuvre.

Les bases utilisables sont celles définies ci-dessus pour la méthode A.

De façon avantageuse, la réaction est mise en oeuvre dans un solvant polaire aprotique et, de préférence, un hydrocarbure halogéné aliphatique (tel que par exemple le chlorure de méthylène ou le tétrachlorure de carbone) ou un hydrocarbure aromatique éventuellement halogéné (tel que par exemple un benzène ou un toluène éventuellement halogéné).

De préférence, le solvant est CCl₄.

La température réactionnelle est préférablement comprise entre -10°C et 100° C, de préférence entre 10°C et 50°C.

Les quantités respectives des composés (IV) et (V) mises en présence dépendent du type de composé de formule (II) visé, tout comme dans le cas précédent (méthode A).

On se rapportera donc à la méthode A pour la détermination des quantités molaires de (IV), (V) et de base à faire réagir.

### Méthode C

Les silanes de formule (II) où x = 2 peuvent être obtenus par ailleurs par réaction d'un aminosulfure de formule :

J-S-NR²R³ (VI)

dans laquelle R², R³ et J sont tels que définis ci-dessus, avec un thiol de formule :

(G²)_{b}(G¹)_{3-b}Si-R¹-SH (VII)

dans laquelle G², G¹, b et R¹ sont tels que définis ci-dessus, en présence d'une base, la base étant préférablement telle que définie ci-dessus.

Pour cette réaction, la température réactionnelle varie avantageusement entre 10 et 40°C, plus préférablement entre 15 et 30°C, par exemple entre 18 et 25°C.

La réaction du composé (VII) sur le composé (VI) est généralement mise en oeuvre dans un solvant aprotique polaire tel que défini dans le cas de la méthode B.

De préférence, le solvant est le benzène ou le toluène.

La réaction du composé (VI) avec le composé (VII) est une réaction stoechiométrique. On préfère opérer en présence d'un léger excès du composé (VI). Ainsi, le rapport molaire de (VI) à (VII) sera généralement compris entre 1 et 1,5, mieux encore 1 et 1,3.

Cette variante peut être mise en oeuvre par exemple pour la préparation des silanes de formule (II) dans lesquels R² ou R³ est distinct d'un atome d'hydrogène.

Les composés de formule (III) peuvent être préparés par réaction de dichlorure de soufre (SCl₂) sur un mercaptosilane approprié de formule (VII) tel que défini ci-dessus, en présence d'une base organique, et préférablement en présence de triéthylamine. Cette réaction est par exemple mise en oeuvre dans un éther à une température de -78 à -50°C. Les bases organiques et les éthers sont généralement tels que définis ci-dessus.

Les amines (IV) sont commerciales, ou facilement préparées à partir de produits commerciaux.

Les composés de formule (V) sont facilement préparés par réaction d'un thiol de formule (VII) tel que défini ci-dessus sur l'halogénure de formule :

J-S-Hal (VIII)

où J et Hal sont tels que définis ci-dessus.

Cette réaction est préférablement mise en oeuvre en présence d'une base, notamment une base organique, à une température de 10 à 50°C, par exemple de 15 à 30°C, notamment entre 18 et 25°C, dans un solvant aprotique polaire généralement tel que défini à la méthode B. De préférence, le solvant est le tétrachlorure de carbone, la base est la triéthylamine et la température est la température ambiante.

Cette réaction est stoechiométrique. Néanmoins, il est souhaitable d'opérer en présence d'un défaut de thiol (VII). Ainsi, le rapport molaire du composé J-S-Hal au composé (VII) est-il avantageusement compris entre 1 et 1,5, mieux encore entre 1 et 1,3.

Les composés de formule (VI) sont facilement obtenus par réaction d'une amine (IV) sur l'halogénure de formule :

J-S-Hal (VIII)

où J et Hal sont tels que définis ci-dessus, en présence d'une base organique. Cette réaction est préférablement mise en oeuvre dans un solvant de type hydrocarbure halogéné (et notamment le tétrachlorure de carbone) à une température généralement comprise entre 10 et 50°C, de préférence entre 15 et 30°C, par exemple entre 18 et 25°C (température ambiante). A titre de base organique, on optera pour l'une quelconque des bases définies ci-dessus et, par exemple, pour la triéthylamine. En variante, il est possible d'utiliser le réactif (IV) comme base. Dans ce cas de figure, on utilisera au moins deux équivalents d'amine (IV) pour 1 équivalent de l'halogénure (VIII).

Les thiols de formule (VII) sont commerciaux ou facilement préparés à partir de composés commerciaux.

Le schéma 1 ci-dessous illustre une voie de synthèse du composé (VIII) :

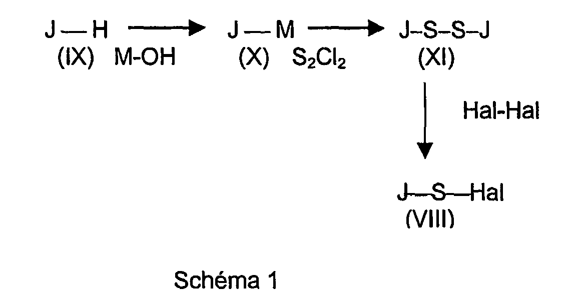

Dans ce schéma, J et Hal sont tels que définis ci-dessus et M représente un métal alcalin, de préférence Na ou K.

Le composé (IX) commercial est transformé en sel de métal alcalin par action d'une base inorganique appropriée, M-OH où M est un métal alcalin, de type hydroxyde de métal alcalin dans un alcool inférieur en C₁-C₄ tel que le méthanol ou l'éthanol. Cette réaction a généralement lieu à une température de 15 à 25°C. Le sel résultant de formule (X) est mis à réagir avec S₂Cl₂ pour conduire au composé (XI). Les conditions réactionnelles avantageuses pour cette réaction sont un solvant aprotique polaire du type d'un hydrocarbure aliphatique halogéné (par exemple : CH₂Cl₂, CCl₄) et une température comprise entre -20°C et 10°C. Puis, l'action de Hal-Hal sur le composé (XI) conduit au composé (VIII) attendu. Dans cette dernière étape, on opère préférablement dans un solvant aprotique polaire de type hydrocarbure aliphatique ou aromatique halogéné (tel que par exemple le chloroforme, le dichlorométhane ou le chlorobenzène) à une température comprise entre 15°C et la température de reflux du solvant ou davantage, de préférence entre 40° et 80°C, par exemple entre 50 et 70°C.

Selon un mode de réalisation préféré, Hal représente le chlore, auquel cas Hal-Hal est introduit sous forme gazeuse dans le milieu réactionnel.

### Méthode D

Les silanes polyfonctionnels de formule (II) où x = 3 peuvent être obtenus en enchaînant les étapes suivantes :
(1) réaction du thiol de formule (VII) avec S₂(Hal)₂ où Hal représente un atome d'halogène, et, de préférence de chlore, en présence d'une base, de préférence une base organique, pour donner :

   (G²)_{b}(G¹)_{3-b}Si-R¹-S-S-S-Hal (XII)

   Cette réaction est par exemple mise en oeuvre dans un éther à une température de -78 à -50° C. Les bases organiques et les éthers sont généralement tels que définis ci-dessus dans la méthode A ; et
(2) réaction du composé (XII) sur l'amine appropriée de formule (IV) en présence d'une base, de préférence une base organique ; pour plus de détails, on pourra se reporter au mode opératoire décrit supra à propos de la conduite de la méthode A.

### Méthode E

Les silanes polyfonctionnels de formule (II) où x = 4 peuvent être obtenus en enchaînant les étapes suivantes :
(1) réaction de l'halogénure de disulfure de formule (III) ou de l'halogénure de trisulfure de formule (XII) avec la quantité requise de soufre élémentaire [apport de 2 atomes de soufre dans le cas du composé (III) ou apport de 1 atome de soufre dans le cas du composé (XII)], en opérant à une température allant de 70°C à 170°C, en présence éventuellement d'un solvant aromatique, pour donner le composé de formule :

   (G²)_{b}(G¹)_{3-b}Si-R¹-S-S-S-S-Hal (XIII)
(2) réaction du composé de formule (XIII) sur l'amine appropriée de formule (IV) en présence d'une base, de préférence une base organique ; pour plus de détails, on pourra se reporter au mode opératoire décrit supra à propos de la conduite de la méthode A.

### TROISIEME OBJET DE L'INVENTION

Selon un autre de ses objets, la présente invention concerne l'utilisation d'une quantité efficace d'au moins un composé organosilicique porteur de groupe(s) de formule (I) à fonction polythiosulfénamide, comme agent de couplage charge blanche-élastomère dans les compositions comprenant au moins un élastomère diénique et une charge blanche à titre de charge renforçante, lesdites compositions étant destinées à la fabrication d'articles en élastomère(s) diénique(s).

Comme agents de couplage qui sont particulièrement adaptés à l'utilisation visée, on citera les composés organosiliciques porteurs chacun de groupe(s) polythiosulfénamide de formule (I) ayant la signification donnée supra dans le cadre du " mode particulièrement adapté de réalisation de l'invention".

Comme agents de couplage qui sont plus particulièrement adaptés à l'utilisation visée, on citera les composés organosiliciques porteurs chacun de groupe(s) polythiosulfénamide de formule (I) ayant la signification donnée supra dans le cadre du " mode plus particulièrement adapté de réalisation de l'invention".

Comme agent de couplage qui sont encore plus particulièrement adaptés à l'utilisation visée on citera les composés organosiliciques porteurs chacun de groupe(s) polythiosulfénamide de formule (I) ayant la signification donnée supra dans le cadre du "mode encore plus particulièrement adapté de réalisation de l'invention".

Comme agents de couplage qui sont tout spécialement adaptés à l'utilisation visée, on citera les composés organosiliciques porteurs chacun de groupe(s) polythiosulfénamide de formule (I) ayant la signification donnée supra dans le cadre du "mode tout spécialement adapté de réalisation de l'invention".

Les agents de couplage qui sont préférentiellement utilisés consistent dans les silanes polyfonctionnels répondant à la formule (II) donnée ci-avant pour les silanes SPF1.

Comme agents de couplage de ce type qui conviennent particulièrement bien, on citera les silanes polyfonctionnels répondant à la formule (II) ayant la signification donnée supra pour les silanes SPF2.

Comme agents de couplage de ce type qui conviennent plus particulièrement bien, on citera les silanes polyfonctionnels répondant à la formule (II) ayant la signification donnée supra pour les silanes SPF3.

Comme agents de couplage de ce type qui conviennent encore plus particulièrement bien, on citera les silanes polyfonctionnels répondant à la formule (II) ayant la signification donnée supra pour les silanes SPF4.

Comme agents de couplage de ce type qui conviennent tout spécialement bien, on citera les silanes polyfonctionnels répondant à la formule (II) ayant la signification donnée supra pour les silanes SPF5.

### QUATRIEME OBJET DE L'INVENTION

Dans le cadre de cette application agent de couplage, la présente invention concerne encore, dans un quatrième objet, les compositions d'élastomère(s) diénique(s) comprenant une charge blanche renforçante obtenues grâce à l'emploi d'une quantité efficace (i) d'au moins un composé organosilicique porteur de groupe(s) de formule (I), à fonction polythiosulfénamide, ou (2i), en particulier, d'au moins un silane polyfonctionnel répondant à la formule (II).

Plus précisément, ces compositions comprennent (les parties sont données en poids) :
- pour 100 parties d'élastomère(s) diénique(s),
- 10 à 200 parties de charge blanche renforçante, de préférence 20 à 150 et plus préférentiellement encore 30 à 100 parties,
- 1 à 20 parties, de préférence 2 à 20 parties et plus préférentiellement encore 2 à 12 parties d'agent(s) de couplage.

De manière avantageuse, la quantité d'agent(s) de couplage, choisie dans les zones générales et préférentielles précitées, est déterminée de manière à ce qu'elle représente de 0,5 % à 20 %, de préférence de 1 % à 15 %, et plus préférentiellement de 1 % à 12 % par rapport au poids de la charge blanche renforçante.

L'homme de métier comprendra que l'agent de couplage pourrait être préalablement greffé sur la charge blanche renforçante (via sa fonction Y), la charge blanche ainsi "précouplée" pouvant ensuite être liée à l'élastomère diénique par l'intermédiaire de la fonction libre X.

Dans le présent mémoire, on entend définir par l'expression "charge blanche renforçante", une charge "blanche" (c'est à dire inorganique ou minérale), parfois appelée charge "claire", capable de renforcer à elle seule, sans autre moyen que celui d'un agent de couplage, une composition d'élastomère(s) de type caoutchouc, naturel(s) ou synthétique(s).

L'état physique sous lequel se présente la charge blanche renforçante est indifférent, c'est-à-dire que ladite charge peut se présenter sous forme de poudre, de microperles, de granulés ou de billes.

De manière préférentielle, la charge blanche renforçante consiste dans la silice, l'alumine ou un mélange de ces deux espèces.

De manière plus préférentielle, la charge blanche renforçante consiste dans la silice, prise seule ou en mélange avec de l'alumine.

A titre de silice susceptible d'être mise en oeuvre dans l'invention conviennent toutes les silices précipitées ou pyrogénées connues de l'homme de l'art présentant une surface spécifique BET ≤ à 450 m²/g. On préfère les silices de précipitation, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de silices hautement dispersibles on peut citer celles ayant une surface spécifique CTAB égale ou inférieure à 450 m²/g, allant de préférence de 30 à 400 m²/g, et particulièrement celles décrites dans le brevet US-A-5 403 570 et les demandes de brevets WO-A-95/09127 et WO-A-95/09128 dont le contenu est incorporé ici. Comme exemples non limitatifs de telles silices hautement dispersibles préférentielles, on peut citer la silice Perkasil KS 430 de la société AKZO, la silice BV3380 de la société DEGUSSA, les silices Zeosil 1165 MP et 1115 MP de la société RHODIA, la silice Hi-Sil 2000 de la société PPG, les silices Zeopol 8741 ou 8745 de la société HUBER. Conviennent aussi les silices précipitées traitées telles que par exemple les silices "dopées" à l'aluminium décrite dans la demande de brevet EP-A-0 735 088 dont le contenu est également incorporé ici.

A titre plus préférentiel, conviennent bien les silices de précipitation ayant :
- une surface spécifique CTAB allant de 100 à 240 m²/g, de préférence de 100 à 180 m²/g,
- une surface spécifique BET allant de 100 à 250 m²/g, de préférence de 100 à 190 m²/g,
- une prise d'huile DOP inférieure à 300ml/100 g, de préférence allant de 200 à 295 ml/100 g,
- un rapport spécifique BET/surface spécifique CTAB allant de 1,0 à 1,6.

Bien entendu, par silice, on entend également des coupages de différentes silices. La surface spécifique CTAB est déterminée selon la méthode NFT 45007 de novembre 1987. La surface spécifique BET est déterminée selon la méthode de BRUNAUER, EMMETT, TELLER décrite dans "The Journal of the American Chemical Society, vol. 60, page 309 (1938)" correspondant à la norme NFT 45007 de novembre 1987. La prise d'huile DOP est déterminée selon la norme NFT 30-022 (mars 1953) en mettant en oeuvre le dioctylphtalate.

A titre d'alumine renforçante, on utilise avantageusement une alumine hautement dispersible ayant :
- une surface spécifique BET allant de 30 à 400 m²/g, de préférence de 60 à 250 m²/g,
- une taille moyenne de particules au plus égale à 500 nm, de préférence au plus égale à 200 nm, et
- un taux élevé de fonctions réactives de surface Al-OH, telle que décrite dans le document EP-A-0 810 258.

Comme exemples non limitatifs de pareilles alumines renforçantes, on citera notamment les alumines A125, CR125, D65CR de la société BAÏKOWSKI.

Par élastomères diéniques susceptibles d'être mis en oeuvre pour les compositions conformes au quatrième objet de l'invention, on entend plus précisément :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi:
   - les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtalène ;
   - les monomères nitriles vinyliques ayant de 3 à 12 atomes de carbone, comme par exemple l'acrylonitrile, le méthacrylonitrile ;
   - les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ; les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM) ;
(4) le caoutchouc naturel ;
(5) les copolymères obtenus par copolymérisation d'isobutène et d'isoprène (caoutchouc butyle), ainsi que les versions halogénées, en particulier chlorées ou bromée, de ces copolymères ;
(6) un mélange de plusieurs des élastomères précités (1 ) à (5) entre eux.

A titre préférentiel, on fait appel à un ou plusieurs élastomère(s) choisi(s) parmi : (1) le polybutadiène, le polychloroprène, le polyisoprène [ou poly(méthyl-2 butadiène-1,3)] ; (2) le poly(isoprène-butadiène), le poly(isoprène-styrène), le poly(isoprène-butadiène-styrène), le poly(butadiène-styrène), le poly(butadiène-acrylonitrile) ; (4) le caoutchouc naturel ; (5) le caoutchouc butyle ; (6) un mélange des élastomères nommément précités (1), (2), (4), (5) entre eux ; (6') un mélange contenant une quantité majoritaire (allant de 51 % à 99,5 % et, de préférence, de 70 % à 99 % en poids) de polyisoprène (1) et/ou de caoutchouc naturel (4) et une quantité minoritaire (allant de 49 % à 0,5 % et, de préférence, de 30 % à 1 % en poids) de polybutadiène, de polychloroprène, de poly(butadiène-styrène) et/ou de poly(butadiène-acrylonitrile) ; (6") un mélange contenant une quantité majoritaire (allant de 51 % à 99,5 % et, de préférence, de 60 % à 99 % en poids) de poly(butadiène-styrène) (2) et une quantité minoritaire (allant de 49 % à 0,5 % et, de préférence, de 40 % à 1 % en poids) de polybutadiène (1) et/ou de polychloroprène (1).

Les compositions conformes à l'invention contiennent en outre tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
■ s'agissant du système de vulcanisation, on citera par exemple :
   - des agents de vulcanisation choisis parmi le soufre ou des composés donneurs de soufre, comme par exemple des dérivés de thiurame ;
   - des accélérateurs de vulcanisation, comme par exemple des dérivés de guanidine
ou des dérivés de thiazoles ;
- des activateurs de vulcanisation comme, par exemple l'oxyde de zinc, l'acide stérarique et le stéarate de zinc ;
   ■ s'agissant d'autre(s) additif(s), on citera par exemple :

- une charge renforçante conventionnelle consistant dans le noir de carbone ; comme noirs de carbone conviennent tous les noirs de carbone, notamment les noirs du type HAF, ISAF, SAF ; à titre d'exemples non limitatifs de tels noirs, on peut citer les noirs N115, N134, N234, N339, N347, N375 ; la quantité de noir de carbone est déterminée de manière à ce que d'une part la charge blanche renforçante mise en oeuvre représente plus de 50 % du poids de l'ensemble charge blanche + noir de carbone, et d'autre part la quantité de charge renforçante totale (charge blanche + noir de carbone) reste dans les intervalles de valeurs indiqués supra, pour la charge blanche renforçante, à propos de la constitution pondérale des compositions ;
- une charge blanche conventionnelle peu ou non renforçante comme par exemple des argiles, la bentonite, le talc, la craie, le kaolin, le dioxyde de titane ou un mélange de ces espèces ;
- des agents antioxydants ;
- des agents antiozonants, comme par exemple la N-phényl-N'-(diméthyl-1,3 butyl)-p-phénylène-diamine ;
- des agents de plastification et des agents d'aide à la mise en oeuvre.

S'agissant des agents d'aide à la mise en oeuvre, les compositions conformes à l'invention peuvent contenir des agents de recouvrement de la charge renforçante, comportant par exemple la seule fonction Y, susceptibles de manière connue, grâce à une amélioration de la dispersion de la charge dans la matrice de caoutchouc et à un abaissement de la viscosité des compositions, d'améliorer la faculté de mise en oeuvre des compositions à l'état cru. Pareils agents consistent par exemple dans des alkylakoxysilanes (notamment des alkyltriéthoxysilanes), des polyols, des polyéthers (par exemple des polyéthylèneglycols), des amines primaires, secondaires ou tertiaires (par exemple des trialcanol-amines), et des polydiméthylsiloxanes α,ω-dihydroxylés. Un pareil agent d'aide à la mise en oeuvre, quand on en utilise un, est employé à raison de 1 à 10 parties en poids, et de préférence 2 à 8 parties, pour 100 parties de charge blanche renforçante.

Le procédé de préparation des compositions d'élastomère(s) diénique(s) comprenant une charge blanche renforçante et au moins un agent de couplage peut se faire selon un mode opératoire classique en une ou deux étapes.

Selon le procédé en une étape, on introduit et malaxe dans un mélangeur interne usuel, par exemple de type BANBURY ou de type BRABENDER, tous les constituants nécessaires à l'exception du (ou des) agent(s) de vulcanisation et éventuellement : du (ou des) accélérateurs de vulcanisation et/ou du (ou des) activateur(s) de vulcanisation. Le résultat de cette première étape de mélange est repris ensuite sur un mélangeur externe, généralement un mélangeur à cylindres, et on y ajoute alors le (ou les) agent(s) de vulcanisation et éventuellement : le (ou les) accélérateur(s) de vulcanisation et/ou le (ou les) activateur(s) de vulcanisation.

Il peut être avantageux pour la préparation de certains articles de mettre en oeuvre un procédé en deux étapes conduites toutes les deux dans un mélangeur interne. Dans la première étape, sont introduits et malaxés tous les constituants nécessaires à l'exception du (ou des) agent(s) de vulcanisation et éventuellement : du (ou des) accélérateur(s) de vulcanisation et/ou du (ou des) activateurs de vulcanisation. Le but de la seconde étape qui suit est essentiellement de faire subir au mélange un traitement thermique complémentaire. Le résultat de cette seconde étape est repris également ensuite sur un mélangeur externe pour y ajouter le (ou les) agent(s) de vulcanisation et éventuellement : le (ou les) accélérateur(s) de vulcanisation, et/ou le (ou les) activateurs de vulcanisation.

La phase de travail en mélangeur interne est opérée généralement à une température allant de 80°C à 200°C, de préférence de 80°C à 180°C. Cette première phase de travail est suivie de la seconde phase de travail en mélangeur externe en opérant à une température plus basse, généralement inférieure à 120°C et de préférence allant de 20°C à 80°C.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de 130°C à 200°C, éventuellement sous pression, pendant un temps suffisant qui peut varier par exemple entre 5 et 90 minutes en fonction notamment de la température de cuisson, du système de vulcanisation adopté et de la cinétique de vulcanisation de la composition considérée.

Il va de soi que la présente invention, prise dans son quatrième objet, concerne les compositions d'élastomère(s) précédemment décrites tant à l'état cru (i.e., avant cuisson) qu'à l'état cuit (i.e., après réticulation ou vulcanisation).

### CINQUIEME OBJET DE L'INVENTION

Les compositions d'élastomère(s) vont servir à préparer des articles en élastomère(s) possédant un corps comprenant lesdites compositions décrites ci-avant dans le cadre du quatrième objet de l'invention. Ces compositions sont particulièrement utiles pour préparer des articles consistant dans des supports de moteurs, des semelles de chaussures, des galets de téléphérique, des joints d'appareillages électroménagers et des gaines de câbles.

Les exemples suivants illustrent la présente invention.

### I - Exemples de préparation des agents de couplage

Les points de fusion (Pf) exprimés en degré Celsius (°C) sont déterminés par projection sur un banc KOFFLER, préalablement étalonné (ΔT = ± 2° C).

Les points d'ébullition (Ebₚᵣₑₛₛᵢₒₙ) sont donnés en millibars (mbar).

Les spectres 250 MHz du proton (RMN ¹H) et du carbone (RMN¹³C) sont enregistrés sur un spectromètre BRUCKER AC 250.

Les déplacements chimiques (δc et δh) sont exprimés en partie par million (ppm) par rapport au deutériochloroforme (CDCl₃).

Les constantes de couplage notées J sont exprimées en Hz.

Les abréviations suivantes sont utilisées : s, *singulet ;* sl, *singulet large* ; d, *doublet ;* t*, triplet ;* q*, quadruplet ;* m*, multiplet.*

Toutes les manipulations avec les composés organosiliciques comprenant des restes alkoxysilanes sont faites sous atmosphère inerte et dans des conditions anhydres.

### EXEMPLE 1

### N-(3-triméthoxysilylpropyldisulfanyl)-bis(isopropyl)amine

### a) chlorure de phtalimidosulfényle

Dans un tricol muni d'une agitation magnétique, on chauffe à 60° C une suspension de 0,1 mole (35,6 g) de disulfure de phtalimide dans 350 ml de chloroforme. On fait passer un courant de chlore gazeux jusqu'à solubilisation complète. On laisse revenir le milieu réactionnel à température ambiante puis on évapore le solvant sous pression réduite. On recristallise le chlorure de phtalimidosulfényle dans du dichlorométhane.
Rendement : 99%
Aspect : cristaux jaunes
Point de fusion : 114° C
RMN ¹H (CDCl₃) δ_{H} :
7,90 (m, 2H aromatiques) ; 8,01 (m, 2H aromatiques).
RMN ¹³C (CDCl₃) δ_{C}
124,7 (2 CH aromatiques) ; 131,6 (2 C aromatiques) ; 135,6 (2 CH aromatiques) ; 165,8 (2 C=O).

### b) N-(N',N'-bis(isopropyl)aminosulfanyl)phtalimide

Dans un tricol muni d'une agitation magnétique et sous atmosphère inerte, on dissout le chlorure de phtalimidosulfényle (0,1 mol ; 21,35 g) dans 350 ml de chloroforme. 0,21 mole de diisopropylamine diluée dans 50 ml de chloroforme est additionnée goutte à goutte à température ambiante. On laisse agiter 3 heures puis on évapore le solvant. On reprend avec de l'éther diéthylique, filtre le chlorhydrate de l'amine puis concentre sous pression réduite.
Rendement : 86%
Aspect : cristaux jaunes
P.f. : 88° C
RMN ¹H (CDCl₃) δ_{H}
1,15 (d, 6H, CH₃) ; 1,21 (d, 6H, CH₃) ; 3,69 (m, 2H, CH) ; 7,73 (m, 2H aromatiques) ; 7,88 (m, 2H aromatiques).
RMN ¹³C (CDCl₃) δ_{C}
22,0 (2xCH₃) ; 22,3 (2xCH₃) ; 56,6 (CH) ; 123,5 (2 CH aromatiques) ;
132,3 (2 C aromatiques) ; 134,1 (2 CH aromatiques) ; 169,4 (C=O).

### c) N-(3-triméthoxysilylpropyldisulfanyl)-bis(isopropyl)amine

Dans un tricol muni d'une agitation magnétique et sous atmosphère inerte, on dissout le sulfure obtenu à l'étape précédente (50 mmol) dans 250 ml de benzène. On additionne en une fois le 3-mercaptopropyltriméthoxysilane (45 mmol) dilué dans un minimum de benzène. On laisse sous agitation à température ambiante pendant 48 heures. On filtre le phtalimide qui a précipité et le sulfure en excès puis on évapore le solvant sous pression réduite.

Le composé obtenu a pour formule : 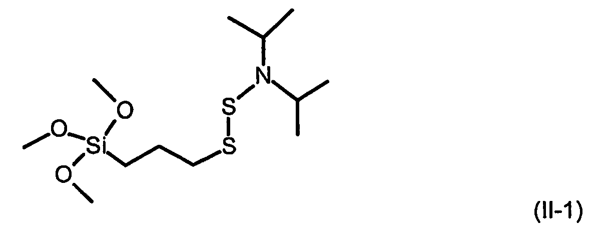 Rendement : 94%
Aspect : huile orange
RMN ¹H (CDCl₃) δ_{H}
0,76 (t, 2H, Si-CH₂) ; 1,19 (d, 12H, CH₃-CH) ; 1,80 (m, 2H, CH₂) ; 2,94 (t, 2H, S-CH₂) ; 3,37 (p, 2H, CH₃-CH) ; 3,56 (s, 9H, -OCH₃).
RMN ¹³C (CDCl₃) δ_{C}
8,3 (Si-CH₂) ; 22,4 (CH₃-CH) ; 23,4 (CH₂) ; 42,3 (S-CH₂) ; 50,5 (-OCH₃) ; 55,8 (N-CH).

On a donc préparé un agent de couplage silane polyfonctionnel de formule (II) dans laquelle :
- G² = CH₃O
- b=3
- R¹ = propylène
- R² = R³ = isopropyle.

### EXEMPLE 2

### N-(3-triéthoxysilylpropyldisulfanyl)-bis(isopropyl)amine

Par mise en oeuvre du procédé de l'exemple 1, mais en remplaçant le 3-mercaptopropyltriméthoxysilane par le 3-mercaptopropyltriéthoxysilane, on obtient le composé du titre de formule : 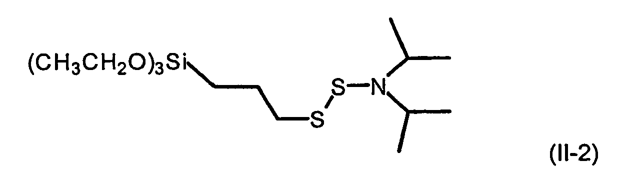 Rendement : 92%
Aspect : huile orange
RMN ¹H (CDCl₃) δ_{H}
0,76 (t, 2H, Si-CH₂); 1,23 (m, 21 H, CH₃-CH₂-O et CH₃-CH-N) ; 1,80 (m, 2H, CH₂) ;
2,94 (t, 2H, S-CH₂) ; 3,37 (p, 2H, CH₃-CH) ; 3,81 (q, 6H, -OCH₂).
RMN ¹³C (CDCl₃) δ_{C}
9,7 (Si-CH₂) ;18,3 (CH₃-CH₂-O) ; 22,5 (CH₃-CH) ; 23,7 (CH₂) ; 42,6 (S-CH₂) ; 55,8 (N-CH) ; 58,4 (-OCH₂).
Spectre de masse (IE 70eV) : MM= 369 g mol⁻¹
m/z (%) : 369(30), 354(5), 225(32), 205(10), 191(25), 179(28), 163(53), 147(10), 132(20), 119(26), 100(12), 90(87), 84(55), 79(40), 63(22), 58(52), 43(100).
I.R. (KBr) cm⁻¹ : 980, 1070, 1120, 1180, 1410, 2380, 2830.

### EXEMPLE 3

### N-(3-triméthoxysilylpropyldisulfanyl)cyclohexylamine

Dans un tricol de deux litres sous atmosphère d'argon, une solution de (110,4 mmol ; 11,34 g) de dichlorure de soufre dans 500 ml d'éther diéthylique anhydre est refroidie à -90° C. Sous agitation mécanique, un mélange de 3-mercaptopropyltriméthoxysilane (104,9 mmol ; 20,56 g) et de triéthylamine (104,9 mmol ; 10,61 g) dans 100 ml d'éther diéthylique anhydre est ajouté goutte à goutte en une heure.

Le milieu réactionnel est agité à -90° C pendant une heure, puis un mélange de cyclohexylamine (209,8 mmol ; 20,80 g) et de thiéthylamine (104,9 mole ; 10,61 g) dans 100 ml d'éther diéthylique anhydre est additionné goutte à goutte en une heure.

On agite pendant 12 heures en laissant revenir le milieu réactionnel à température ambiante, puis on filtre le chlorhydrate de thiéthylamine précipité, on lave le précipité avec de l'éther diéthylique anhydre et on concentre sous pression réduite. Une distillation sous pression réduite permet d'éliminer les excès de thiéthylamine et de cyclohexylamine et d'isoler ainsi 30g du composé souhaité. Le composé obtenu a pour formule : 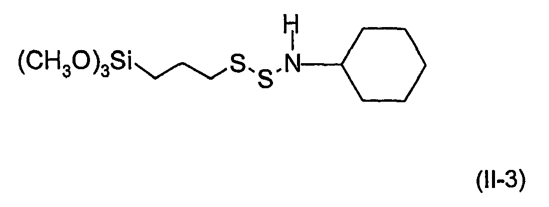 Rendement : 88%
Aspect : huile jaune
Spectre de masse (IE 70 eV) : MM = 325 g mol⁻¹ en accord avec la structure 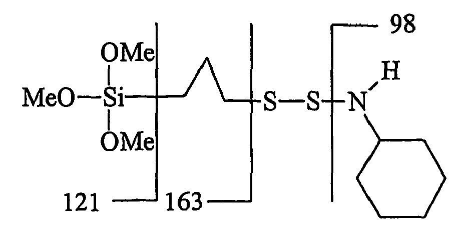 où Me = CH₃

### EXEMPLE 4

### N-méthyl-N-(3-triéthoxysilylpropyldisulfanyl)cyclohexylamine

Dans un tricol de deux litres sous atmosphère d'argon, une solution de (100 mmol ; 10,3 g) de dichlorure de soufre dans 400 ml d'éther diéthylique anhydre est refroidie à -78°C. Sous agitation mécanique, un mélange de 3-mercaptopropyltriméthoxysilane (100 mmol) et de triéthylamine (100 mmol ; 10,2 g) dans 150 ml d'éther diéthylique anhydre est ajouté goutte à goutte en une heure. Le milieu réactionnel est agité à cette température pendant une heure puis un mélange de cyclohexylméthylamine (110 mmol) et de triéthylamine (100 mmol ; 10,2 g) dans 100 ml d'éther diéthylique anhydre est additionné goutte à goutte en une heure.

On laisse revenir le milieu réactionnel à température ambiante puis on filtre le chlorhydrate de triéthylamine et on concentre sous pression réduite. Une distillation sous pression réduite permet d'éliminer les traces de réactifs n'ayant pas réagi.

Le composé obtenu a pour formule : 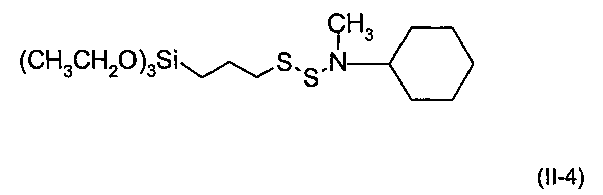 Rendement : 85%
Aspect : huile jaune
RMN ¹H (CDCl₃) δ_{H}
0,75 (t, 2H, Si-CH₂) ; 1,18 (m, 11H, 3xCH₃ et CH₂) ; 1,68-1,95 (m, 6H, CH₂) ; 2,28 (m, 2H, CH₂) ; 2,39 (m, 2H, CH₂) ; 2,90 (t, 2H, SCH₂) ; 3,05 (m, 1 H, NCH) ; 3,15 (s, 3H, NCH₃) ; 3,81 (q, 6H, -OCH₂).
RMN ¹³C (CDCl₃) δ_{C}
9,5 (Si-CH₂) ; 18,2 (CH₃) ; 22,2 (CH₂) ; 26,7 (CH₂) ; 25,9 (2 x CH₂) ; 32,8 (2 x CH₂) ; 41,6 (S-CH₂) ; 45,9 (N-CH₃); 58,4 (-OCH₂) ; 60,2 (N-CH).

### EXEMPLE 5

### N-(3-triéthoxysilylpropyldisulfanyl)benzylamine

Par mise en oeuvre du protocole opératoire de l'exemple 4, mais en remplaçant la cyclohexylméthylamine par la benzylamine, on obtient le composé du titre, de formule : 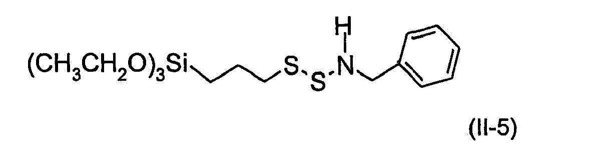 Rendement : 88%
Aspect : huile jaune
RMN ¹H (CDCl₃) δ_{H}
0,74 (t, 2H, Si-CH₂) ; 1,21 (t, 9H, CH₃) ; 1,77 (m, 2H, CH₂) ; 2,91 (t, 2H, S-CH₂) ;
3,80 (q, 9H, OC**H**_{**2**}) ; 4,10 (s, 2H, S-CH₂) ; 7,29 (m, 5H aromatiques). RMN ¹³C (CDCl₃) δ_{C}
9,5 (Si-CH₂) ; 22,1 (CH₂) ; 41,2 (S-CH₂) ; 58,4 (-OCH₂) ; 60,5 (N-CH₂) ;
127,5-128,5-129.1 (5 CH aromatiques) ; 137,4 (C aromatique).

### EXEMPLE 6

### N-méthyl-N-3'-triméthoxysilylpropyldisulfanyl-benzylamine

Par mise en oeuvre du procédé de l'exemple 1, mais en remplaçant la diisopropylamine par la benzyméthylamine, on obtient le composé du titre de formule : 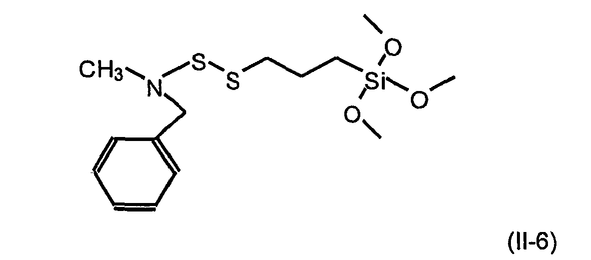 Rendement : 95%
Aspect : huile jaune
RMN ¹H (CDCl₃) δ_{H}
0,78 (t, 2H, Si-C**H**₂) ; 1,86 (m, 2H, C**H**₂) ; 2,74 (NC**H**₃) ; 2,89 (t, 2H, S-C**H**₂) ;
3,57 (s, 9H, -OC**H**₃) ; 4,10 (s, 2H, N-C**H**₂) ; 7,31 (m, 5H aromatiques). RMN ¹³C (CDCl₃) δ_{C}
8,2 (Si-**C**H₂) ; 22,2 (**C**H₂) ; 42,6 (S-**C**H₂) ; 44,9 (**NC**H₃) ; 50,5 (-O**C**H₃) ;
64,1 (N-CH₂); 127,6-128,4-128,9 (5 **C**H aromatiques) ; 137,4 (**C** aromatique).

### EXEMPLE 7

### N-(3-éthoxydiméthylsilylpropyldisulfanyl)-bis(isopropyl)amine

### a) chlorure de phtalimidosulfényle

Il est préparé comme indiqué dans l'exemple 1a.

### b) N-(N',N'-bis(isopropyl)aminosulfanyl)phtalimide

Il est préparé comme indiqué dans l'exemple 1b.

### c) 3-mercaptopropyldiméthyléthoxysilane

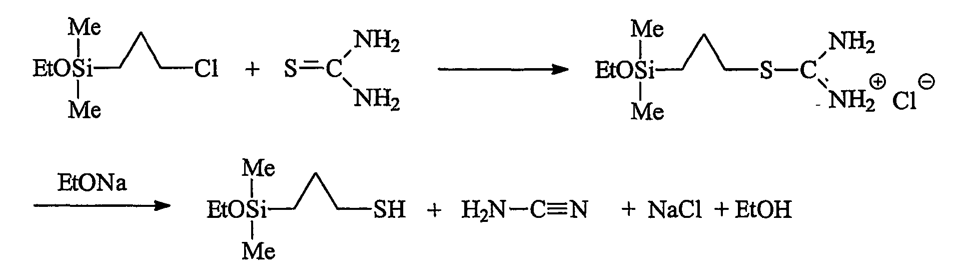

Dans un réacteur double enveloppe de 5 litres muni d'une agitation mécanique , on introduit 1133 ml d'éthanol, 300 g de thiourée (3.922 moles), 2.42 g de Nal (25.58 mmoles) et 711.5 g de chloropropyldiméthyléthoxysilane (3.942 moles). Le milieu est agité et porté à reflux pendant 20 heures. 1273.8 g d'une solution d'éthylate de sodium (21% EtONa dans l'éthanol, 3.934 moles de EtONa) sont alors coulés à cette température sur une période de 10 minutes. Le milieu réactionnel est abandonné dans ces conditions pendant 3 heures. Un précipité apparaît.

On laisse revenir le milieu réactionnel à température ambiante, on filtre et on évapore l'éthanol. Une huile jaune est obtenue. Elle est distillé sous pression réduite.
Rendement : 34%
Eb _{4 mbars} = 58°C
Aspect : huile incolore
RMN ¹H (CDCl₃) δ_{H}
-0.01 (s, 6H, Si-CH₃) ; 0.57 (m, 2H, CH₂) ; 1,05 (t, 3H, CH₃) ; 1.55 (m, 2H, CH₂₋CH₂) ; 2.42 (t, 2H, -S-CH₂) ; 3.55 (q, 2H, CH₂O).

### d) N-(3-éthoxydiméthylsilylpropyldisulfanyl)-bis(Isopropyl)amine

Dans un tricol muni d'une agitation magnétique et sous atmosphènre inerte, on dissout le N-(N',N'-bis(isopropyl)aminosulfanyl)phtalimide (30.51 g, 109.7 mmoles) dans le dichlorométhane (600 ml). On additionne à température ambiante le 3-mercaptopropyléthoxydiméthylsilane (18.02 g, 101 mmoles) à un débit de 5 ml/ minutes. On laisse sous agitation à température ambiante pendant 20 heures. On filtre le phtalimide qui a précipité puis on évapore le solvant sous pression réduite. La pâte obtenue est reprise au toluène. On filtre le phtalimide qui a précipité et le sulfure en excès puis on évapore sous pression réduite. Le composé obtenu à la formule : 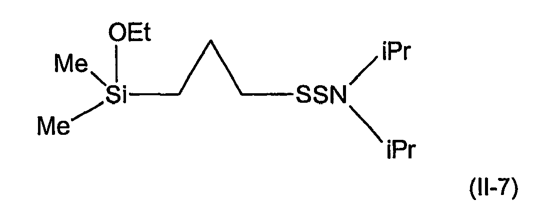 Rendement : 82%
Aspect : huile jaune
RMN ¹H (CDCl₃) δ_{H}
0.11 (s, 6H, Si-CH₃); 0.67 (m, 2H, Si-CH₂); 1.16-1.21 (plusieurs signaux, 15H, CH₂-CH₃ + CH-CH₃); 1.73 (m, 2H, CH₂); 2.92 (m, 2H,S-CH₂); 3.38 (m, 2H, CH) ; 3.66 (q, 2H, CH₂O).

### Il - Exemples de préparation des compositions de caoutchouc

### EXEMPLE 8

Ces exemples ont pour but de démontrer les performances de couplage (charge blanche-élastomère diénique) d'un silane-dithiosulfénamide de formule (II-3) ; ces performances sont comparées à celles des agents de couplage conventionnels consistant dans le TESPT et le TESPD. Pour ce faire, on prépare différentes compositions d'élastomères diéniques, renforcées par une charge blanche à base de silice de précipitation, lesdites compositions étant représentatives de formulations de semelles de chaussures.

On rappelle que le TESPT est le tétrasulfure de bis(3-triéthoxysilylpropyl) ; il est commercialisé par exemple par la société DEGUSSA sous la dénomination Si69 ou encore par la société WITCO sous la dénomination Silquest A1289 (dans les deux cas, mélange commercial de polysulfures Sy avec une valeur moyenne pour y qui est proche de 4).

La formule développée du TESPT est :

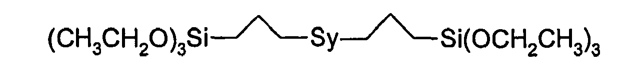

On rappelle que le TESPD est le disulfure de bis(3-triéthoxysilylpropyl) ; il est commercialisé par exemple par la société DEGUSSA sous la dénomination Si266. La formule développée du TESPD correspond à la formule donnée supra, dans laquelle le polysulfure Sy possède une valeur moyenne qui est centrée sur 2.

Les formules mentionnées supra sont à comparer à celle de l'agent de couplage silane-dithiosulfénamide de formule (II-3) suivante :

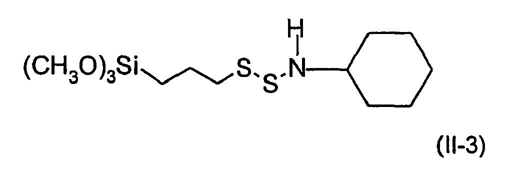

On note qu'une partie des structures chimiques mentionnées ci-dessus est semblable (fonction Y ― ici Si(alkoxy)₃- et groupe hydrocarboné ― ici chaîne propylène ― permettant de relier Y et X), la seule différence résidant dans la nature de la fonction soufrée (fonction X) greffable sur l'élastomère diénique : groupe polysulfure Sy pour les compositions conventionnelles, groupe dithiosulfénamide pour la composition de l'invention.

Les agents de couplage sont utilisés ici à un taux isomolaire en silicium, c'est-à-dire qu'on utilise, quelle que soit la composition, le même nombre de moles de fonctions Y (ici Y = Si(alkoxy)₃) réactives vis-à-vis de la silice et de ses groupes hydroxyles de surface.

Par rapport au poids de charge renforçante, le taux d'agent de couplage, dans tous les cas représente moins de 11 % en poids par rapport à la quantité de charge renforçante.

### 1) Constitution des compositions :

Dans un mélangeur interne de type BRABENDER, on prépare les compositions suivantes dont la constitution, exprimée en partie en poids, est indiquée dans le tableau I donné ci-après :

**Tableau I**

| Composition | | Témoin1 | Témoin 2 | Ex.8 |
|---|---|---|---|---|
| Caoutchouc SBR | (1) | 100 | 100 | 100 |
| Silice | (2) | 58 | 58 | 58 |
| Oxyde de zinc | (3) | 1,82 | 1,82 | 1,82 |
| Acide stéarique | (4) | 1,1 | 1,1 | 1,1 |
| Composé TESPT | | 4,6 | --- | --- |
| Composé TESPD | | --- | 4,1 | --- |
| Composé (II-3) | | --- | --- | 6,1 |
| CBS | (5) | 1,3 | 1,3 | 1,3 |
| Anti-oxydant | (6) | 1,45 | 1,45 | 1,45 |
| DPG | (7) | 1,45 | 1,45 | 1,45 |
| Soufre | (8) | 1,1 | 1,1 | 1,1 |

| | | | | |
|---|---|---|---|---|
| (1) Copolymère styrène-butadiène synthétisé en solution (type BUNA VSL 5525-1) contenant 27,3% d'huile. | | | | |
| (2) Silice hautement dispersible Zéosil 1165 MP, commercialisée par la Société RHODIA SILICES. | | | | |
| (3) et (4) Activateurs de vulcanisation. | | | | |
| (5) N-cyclohexyl-2-benzothiazyl-sulfénamide (accélérateur de vulcanisation). | | | | |
| (6) N-(1,3-diméthylbutyl)-N'-phényl-paraphénylène diamine. | | | | |
| (7) Diphényl-guanidine (accélérateur de vulcanisation). | | | | |
| (8) Agent de vulcanisation. | | | | |

### 2) Constitution des compositions :

Dans un mélangeur interne de type BRABENDER, on introduit les divers constituants dans l'ordre, aux temps et aux températures indiquées ci-après :

| Temps | Température | Constituants |
|---|---|---|
| 0 minute | 90°C | Caoutchouc SBR |
| 2 minutes | 115°C | 2/3 silice + agent de couplage |
| 4 minutes | 130°C | 1/3 silice + acide stéarique + oxyde de zinc |
| 5 minutes | 140°C | Vidange |

La vidange ou tombée du contenu du mélangeur se fait après 5 minutes. La température atteinte est de 140°C.

Le mélange obtenu est introduit ensuite sur un mélangeur à cylindres, maintenu à 30°C, et on introduit le CBS, l'anti-oxydant, la DPG et le soufre. Après homogénéisation, le mélange final est calandré sous la forme de feuilles de 2,5 à 3 mm d'épaisseur.

### 3) Propriétés rhéologiques des compositions :

Les mesures sont réalisées sur les compositions à l'état cru. On a porté dans le tableau II suivant les résultats concernant le test de rhéologie qui est conduit à 150°C pendant 30 minutes à l'aide d'un rhéomètre MONSANTO 100 S.

Selon ce test la composition à tester est placée dans la chambre d'essai régulée à la température de 150°C, et on mesure le couple résistant, opposé par la composition, à une oscillation de faible amplitude d'un rotor biconique inclus dans la chambre d'essai, la composition remplissant complètement la chambre considérée. A partir de la courbe de variation du couple en fonction du temps, on détermine : le couple minimum qui reflète la viscosité de la composition à la température considérée ; le couple maximum et le delta-couple (entre couple maximum et couple minimum) qui reflètent le taux de réticulation entraîné par l'action du système de vulcanisation ; le temps T-α (par exemple T-90 ou T-99) nécessaire pour obtenir un état de vulcanisation correspondant à α % (par exemple 90 % ou 99 %) de la vulcanisation complète marquée par l'écart entre les couples minimum et les couples maximum ; et le temps de grillage TS-2 (ou TS-5) correspondant au temps nécessaire pour avoir une remontée de 2 points (ou 5 points) au dessus du couple minimum à la température considérée (150°C) et qui reflète le temps pendant lequel il est possible de mettre en oeuvre les mélanges crus à cette température sans avoir d'initiation de la vulcanisation.

On mesure également la constante de vitesse de conversion notée K (exprimée en min⁻¹), d'ordre 1, calculée entre 30 % et 80 % de conversion, qui permet d'apprécier la cinétique de vulcanisation (plus K est élevée, plus la cinétique est rapide).

Sur les compositions à l'état cru, on mesure également la plasticité MOONEY. On opère selon les indications de la norme NFT 43-005. La mesure de plasticité MOONEY se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité MOONEY (ML 1+4) est exprimée en "unité Mooney" (UM, avec 1 UM = 0,83 Newton.mètre).

Les résultats obtenus sont indiqués dans le tableau II suivant.

**Tableau II**

| Propriétés avant cuisson | Témoin 1 | Témoin 2 | Exemple 8 |
|---|---|---|---|
| Couple mini | 11,5 | 13,7 | 11,5 |
| Couple maxi | 69,5 | 58,8 | 69 |
| TS-2 (minutes) | 8,4 | 10,1 | 4,2 |
| T-90 (minutes) | 41,1 | 39,3 | 25,1 |
| ML 1+4 | 68 | 78 | 64 |

### 4) Propriétés mécaniques des vulcanisats :

Les mesures sont réalisées sur les compositions uniformément vulcanisées 40 minutes à 150°C.

Les propriétés mesurées et les résultats obtenus sont rassemblés dans le tableau III suivant :

**Tableau III**

| Propriétés mécaniques | | Témoin1 | Témoin 2 | Exemple 8 |
|---|---|---|---|---|
| Module 100 % | (1) | 2,9 | 2,2 | 3 |
| Module 300 % | (1) | 12,4 | 9,1 | 14,1 |
| Résistance à la rupture | (1) | 20,7 | 22,5 | 21,4 |
| Indices de renforcement : | | | | |
| M 300 %/M 100 % | | 4,28 | 4,14 | 4,70 |
| Dureté Shore A | (2) | 70 | 62 | 66 |
| Déchirement | (3) | 37,6 | 20,7 | 24,4 |

| | | | | |
|---|---|---|---|---|
| (1) Les essais de traction sont réalisés conformément aux indications de la norme NF T 46-002 avec des éprouvettes de type H2. Les modules 100 %, 300 %, et la résistance à la rupture sont exprimés en MPa ; | | | | |
| (2) La mesure est réalisée selon les indications de la norme ASTM D 3240. La valeur donnée est mesurée à 15 secondes. | | | | |
| (3) La mesure est réalisée selon les indications de la norme NF T 46-035 (dechirement "pantalon"). | | | | |

On constate que la composition de l'invention (cf. exemple 8) présente un compromis de propriétés supérieur à celui obtenu avec les compositions de référence conformes aux témoins 1 et 2.

### EXEMPLE 9

Dans ce nouvel exemple, on démontre de nouveau les performances améliorées d'une composition conforme à l'invention, comparée à deux compositions de l'art antérieur utilisant des agents de couplage connus.

Les trois compositions testées sont identiques, aux différences près qui suivent :
- témoin 3 : composition comprenant le silane TESPT ;
- témoin 4 : composition comprenant le silane dithiosulfénamide de formule (II-8) (non conforme) qui est défini ci-après ;
- exemple 9 : composition cmoprenant le silane dithiosulfénamide de formule (II-7) (invention).

Le silane dithiosulfénamide de formule (II-7) est celui préparé à l'exemle 7. Le silane non conforme de formule (II-8) est le N-(3-triéthoxysilylpropyldisulfanyl)-bis(éthyl)amine ; il est préparé comme indiqué ci-après :

### a) chlorure de phtalimidosulfényle

Il est préparé comme indiqué dans l'exemple 1a.

### b) N-(N',N'-bis(éthyl)aminosulfanyl)phtalimide

Il est préparé comme indiqué dans l'exemple 1b, mais en remplaçant la diisopropylamine par la diéthylamine.

### c) N-(3-triéthoxysilylpropyldisulfanyl)-bis(éthyl)amine

On met en oeuvre le procédé décrit dans l'exemple 7, étape d, en remplaçant le 3-mercaptopropyléthoxydiméthylsilane par le 3-mercaptopropyltriéthoxysilane normalement disponible dans le commerce ; on obtient le composé du titre de formule : 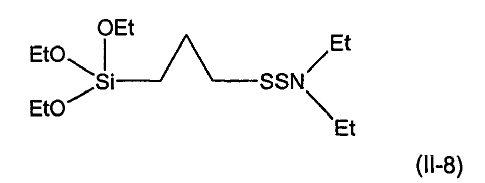 Rendement : 88%
Aspect : huile orange
RMN ¹H (CDCl₃) δ_{H}
0.72 (m, 2H, Si-CH₂); 1.14-1.25 (plusieurs signaux, 15H, O-CH₂-CH₃ ⁺ N-CH₂₋CH₃) ; 1.80 (m, 2H, CH₂-CH₂); 2.83-2.90 (plusieurs signaux, 6H, N-CH₂ + -S-CH₂) ; 3.81 (q, 6H, CH₂O).

Les deux silanes de formules (II-7) et (II-8) présentent des formules très voisines, leurs structures différant essentiellement par la nature des substituants R² et R³ de l'atome d'azote : silane (II-7): R² = R³ = isopropyle (iPr) ; silane (II-8): R² = R³ = éthyle (Et).

On note que le silane de formule (II-8) ne remplit pas les conditions requises par l'invention, de par la nature de ses radicaux R² et R³ (éthyle au lieu d'alkyle en C₃-C₈). Un tel silane de formule (II-8) a été décrit dans le brevet US-A-4 292 234 et exemplifié comme agent de couplage dans des compositions élastomériques renforcées de silice (voir tableau IV).

Comme précédemment dans l'exemple 8, les trois agents de couplage sont utilisés à un taux isomolaire en silicium, c'est-à-dire qu'on utilise, quelle que soit la composition, le même nombre de moles de fonctions Y [Si(OEt)₃ ou Si(OEt)Me₂ selon les cas] réactives vis-à-vis des groupes hydroxyles de surface de la silice. Dans tous les cas, le taux d'agent de couplage est inférieur à 10 pce (parties en poids pour 100 parties d'élastomères), soit moins de 15% en poids par rapport à la quantité de silice).

Les tableaux IV et V qui suivent donnent la formulation des différentes compositions (tableau IV - taux des différents produits exprimés en pce), leurs propriétés avant et après cuisson (40 min à 150°C), ainsi que les propriétés rhéométriques à 150°C.

**Tableau IV**

| Composition N°: | Témoin 3 | Témoin 4 | EX 9 |
|---|---|---|---|
| SBR (1) | 88.5 | 88.5 | 88.5 |
| BR (2) | 25 | 25 | 25 |
| silice (3) | 80 | 80 | 80 |
| huile aromatique (4) | 21.5 | 21.5 | 21.5 |
| alkoxysilane (5) | 6.4 | - | - |
| alkoxysilane (6) | - | 8.3 | - |
| alkoxysilane (7) | - | - | 7.5 |
| ZnO | 2.5 | 2.5 | 2.5 |
| DPG (8) | 1.5 | 1.5 | 1.5 |
| acide stéarique | 2 | 2 | 2 |
| paraffine | 1.5 | 1.5 | 1.5 |
| antioxydant (9) | 1.9 | 1.9 | 1.9 |
| Soufre | 1.1 | 1.1 | 1.1 |
| accélérateur (10) | 2 | 2 | 2 |

| | | | |
|---|---|---|---|
| (1) SBR avec 57 % de motifs polybutadiène 1-2 ; 25 % de styrène ; Tg = -26°C ; 75 pce SBR sec étendu avec 13,5 pce d'huile aromatique (soit un total de 88,5 pce) ; | | | |
| (2) BR avec 4,3 % de 1-2 ; 2,7% de trans ; 93% de cis 1-4 (Tg = -104°C) ; | | | |
| (3) silice type "HD" - "Zeosil 1165MP" de la société RHODIA sous forme de microperles (BET et CTAB : environ 150-160 m²/g) ; | | | |
| (4) huile "Enerflex 65" de la société BP ; | | | |
| (5) TESPT ("Si69" de la société DEGUSSA) ; | | | |
| (6) alkoxysilane dithiosulfénamide de formule (II-8) ; | | | |
| (7) alkoxysilane dithiosulfénamide de formule (II-7) | | | |
| (8) Diphénylguanidine ("Vulkacit D" de la société BAYER) ; | | | |
| (9) N-1,3-diméthylbutyl-N-phényl-para-phénylènediamine ("Santoflex 6-PPD" de la société Flexsys) ; | | | |
| (10) N-cyclohexyl-2-benzothiazyl-sulfénamide ("Santocure CBS" de la société FLEXSYS). | | | |

**Tableau V**

| Composition N°: | Témoin 3 | Témoin4 | EX 9 |
|---|---|---|---|
| *Propriétés avant cuisson :* | | | |
| ML1+4 | 98 | 87 | 76 |
| TS-5 (min) | 17 | 10 | 12 |
| | | | |

| *Propriétés rhéométriques :* | | | |
|---|---|---|---|
| T-99 (min) | 37 | 31 | 28 |
| Delta-couple (dN.m) | 17.5 | 18.7 | 19.9 |
| K (min⁻¹) | 0.157 | 0.180 | 0.206 |
| | | | |

| *Propriétés après cuisson:* | | | |
|---|---|---|---|
| Module 100 % (MPa) | 1.9 | 2.1 | 2.3 |
| Module 300 % (MPa) | 2.4 | 2.7 | 2.7 |
| Résistance à la rupture (MPa) | 21.6 | 22.1 | 20.7 |
| allongement à la rupture (%) | 508 | 466 | 492 |

A la lecture des résultats du tableau V, on note que la composition selon l'invention (exemple 9), comparée aux deux compositions témoins, présente de nombreuses caractéristiques améliorées :
- un temps de grillage (TS-5) inférieur à celui de la composition du témoin 3, tout en restant avantageusement supérieur à 10 min (témoin 4) ;
- une valeur de plasticité Mooney très nettement diminuée, tant par rapport à la composition du témoin 3 (diminution de 23%) que par rapport à l'autre composition du témoin 4 ;
- des propriétés rhéométriques sensiblement améliorées, notamment en termes de rendement de vulcanisation (plus élevé, voir delta-couple) et de cinétique de cuisson (plus rapide, voir constante K) ;
- enfin, des valeurs de modules sous fort allongement (modules 100 %et 300 %) au moins aussi élevées.

En conclusion, l'agent de couplage sélectionné pour les compositions conformes à l'invention confère à ces dernières des propriétés de renforcement élevées, d'excellentes propriétés de mise en oeuvre à l'état cru grâce à une plasticité réduite, une très bonne aptitude à la vulcanisation, révélant ainsi une efficacité globale supérieure à celle du TESPT, agent de couplage de référence dans les compositions de caoutchouc diénique renforcées d'une charge inorganique telle qu'une silice renforçante, comme à celle du silane dithiosulfénamide décrit dans le document US-A-4 292 234 précité.

## Revendications

1. Composé organosilicique comportant, par molécule, liés à des atomes de silicium, d'une part une fonction Y consistant dans au moins un groupe hydroxyle ou un groupe monovalent hydrolysable, et d'autre part une fonction X capable de réagir avec un élastomère caoutchouc, ledit composé organosilicique étant **caractérisé en ce que** la fonction X consiste dans au moins un groupe fonctionnel polythiosulfénamide de formule : 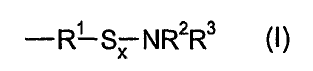 dans laquelle :
■ la valence libre est liée à un atome de silicium du composé organosilicique ;
■ le symbole R¹ représente un radical divalent choisi parmi : un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome d'azote portant 1 à 2 groupes monovalents choisis parmi : un atome d'hydrogène ; un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ;
■ x est un nombre entier ou fractionnaire, allant de 2 à 4 ;
■ l'un des substituants de l'atome d'azote, R² ou R³, représente : un atome d'hydrogène ; un groupe hydrocarboné aliphatique saturé ; un groupe carbocyclique saturé et/ou aromatique, monocyclique ou polycyclique ; ou un groupe présentant une partie hydrocarbonée aliphatique saturée et une partie carbocyclique saturée et/ou aromatique, monocyclique ou polycyclique;
■ l'autre substituant de l'atome d'azote, respectivement R³ ou R², représente : un groupe hydrocarboné aliphatique saturé ayant au moins 3 atomes de carbone ; un groupe carbocyclique saturé et/ou aromatique, monocyclique ou polycyclique ; ou un groupe présentant une partie hydrocarbonée aliphatique saturée comportant un nombre quelconque d'atomes de carbone et une partie carbocyclique saturée et/ou aromatique, monocyclique ou polycyclique ;
■ les substituants R² et R³ peuvent, en outre, former ensemble et avec l'atome d'azote auquel ils sont liés, un cycle unique ayant de 5 à 7 chaînons, comportant dans le cycle 3 à 6 atomes de carbones, au moins 1 atome d'azote et éventuellement 1 ou 2 double(s) liaison(s) insaturée(s).

2. Composé selon la revendication 1, **caractérisé en ce que** le groupe polythiosulfénamide répond à la formule (I) dans laquelle :
■ R¹ représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ x est un nombre, entier ou fractionnaire, allant de 2 à 4 ;
■ R² (ou R³)représente : un atome d'hydrogène ; un radical alkyle, linéaire ou ramifié, en C₁-C₈ ; un radical cycloalkyle en C₅-C₁₀ ; un radical aryle en C₆-C₁₈ ; ou un radical (C₆-C₁₈)aryl-(C₁-C₈)alkyle ;
■ R³ (ou R²) représente : un radical alkyle, linéaire ou ramifié, en C₃-C₈ ; un radical cycloalkyle en C₅-C₁₀, un radical aryle en C₆-C₁₈, ou un radical (C₆-C₁₈)aryl-(C₁₋C₈)alkyle,
■ R² et R³ peuvent, en outre, former ensemble et avec l'atome d'azote auquel ils sont liés, un cycle unique choisi parmi le pyrrole, l'imidazole et le pyrazole.

3. Composé selon la revendication 1, **caractérisé en ce que** le groupe polythiosulfénamide répond à la formule (1) dans laquelle :
■ R¹ représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ x est un nombre, entier ou fractionnaire, allant de 2 à 4 ;
■ R² (ou R³) représente : un atome d'hydrogène ; un radical alkyle, linéaire ou ramifié, en C₁-C₈ ; un radical cycloalkyle en C₅-C₁₀ ; ou un radical (C₆-C₁₂)aryl-(C₁-C₈)alkyle ;
■ R³ (ou R²) représnte : un radical alkyle, linéaire ou ramifié, en C₃-C₈ ; un radical cycloalkyle en C₅-C₁₀, ou un radical (C₆-C₁₂)aryl-(C₁-C₈)alkyle.

4. Composé selon la revendication 1, **caractérisé en ce que** le groupe polythiosulfénamide répond à la formule (I) dans laquelle :
■ R¹ représente une chaîne alkylène en C₁-C₈ ;
■ x est un nombre, entier ou fractionnaire, allant de 2 à 3 ;
■ le symbole R² (ou R³) est choisi dans le groupe formé par l'hydrogène, les radicaux méthyle, éthyle, propyle, isopropyle, n-butyle, isobutyle, t-butyle, pentyle, hexyle, cyclohexyle et benzyle,
■ le symbole R³ (ou R²) est choisi dans le groupe formé par les radicaux propyle, isopropyle, n-butyle, isobutyle, t-butyle, pentyle, hexyle, cyclohexyle et benzyle.

5. Composé selon la revendication 1, **caractérisé en ce que** le groupe polythiosulfénamide répond à la formule (I) dans laquelle :
■ le symbole R¹ est choisi dans le groupe formé par les radicaux divalents méthylène, éthylène et propylène ;
■ x est un nombre égal à 2 ;
■ le symbole R² (ou R³) est choisi dans le groupe formé par l'hydrogène, les radicaux méthyle, éthyle, propyle, isopropyle, cyclohexyle et benzyle ;
■ le symbole R³ (ou R²) est choisi dans le groupe formé par les radicaux propyle, isopropyle, cyclohexyle et benzyle.

6. Composé selon la revendication 1, **caractérisé en ce qu'**il est choisi parmi les silanes polyfonctionnels répondant à la formule générale : 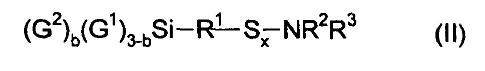 dans laquelle :
■ b représente un nombre choisi parmi 1, 2 et 3 ;
■ les symboles G¹, identiques ou différents, représentent chacun : un groupe hydrocarboné aliphatique, saturé ou insaturé ; un groupe carbocyclique, saturé, insaturé et/ou aromatique, monocyclique ou polycyclique ; ou un groupe présentant une partie hydrocarbonée aliphatique, saturée ou insaturée et une partie carbocyclique telle que définie ci-dessus ;
■ les symboles G², identiques ou différents, représentent chacun : un groupe hydroxyle ou un groupe monovalent hydrolysable ;
■ R¹, x, R² et R³ prennent les définitions générales données ci-avant dans la revendication 1 à propos de la formule (I).

7. Composé selon les revendications 6 et 2, **caractérisé en ce qu'**il est choisi parmi les silanes polyfonctionnels de formule (II) dans laquelle :
■ R¹ , x, R² et R³ prennent les définitions spécifiques données supra dans la revendication 2 ;
■ b représente un nombre choisi parmi 1, 2 et 3 ;
■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G², identiques ou différents, représentent chacun : un radical alkoxy, linéaire ou ramifié, en C₁-C₈, éventuellement substitué par un ou plusieurs (C₁-C₈)alkoxy.

8. Composé selon les revendications 6 et 3, **caractérisé en ce qu'**il est choisi parmi les silanes polyfonctionnels de formule (II) dans laquelle :
■ R¹, x, R² et R³ prennent les définitions spécifiques données supra dans la revendication 3 ;
■ b représente un nombre choisi parmi 1, 2 et 3 ;
■ les symboles G', identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G², identiques ou différents, représentent chacun : un radical alkoxy, linéaire ou ramifié, en C₁-C₈, éventuellement substitué par un ou plusieurs (C₁-C₈)alkoxy.

9. Composé selon les revendications 6 et 4, **caractérisé en ce qu'**il est choisi parmi les silanes polyfonctionnels de formule (II) dans laquelle :
■ R¹, x, R² et R³ prennent les définitions spécifiques données supra dans la revendication 4 ;
■ b représente un nombre choisi parmi 1, 2 et 3 ;
■ les symboles G¹, identiques ou différents, sont choisis dans le groupe formé par les radicaux méthyle, éthyle, propyle, isopropyle, cyclohexyle et phényle ;
■ les symboles G², identiques ou différents, sont choisis dans le groupe formé par les radicaux méthoxy, éthoxy, n-propoxy, isoproxy, méthoxyméthoxy, éthoxyéthoxy et méthoxyéthoxy.

10. Composé selon les revendications 6 et 5, **caractérisé en ce qu'**il est choisi parmi les silanes polyfonctionnels de formule (II) dans laquelle :
■ R¹, x, R² et R³ prennent les définitions spécifiques données supra dans la revendication 5 ;
■ b représente un nombre égal à 3 ;
■ les symboles G², identiques, sont choisis dans le groupe formé par les radicaux méthoxy, éthoxy, n-propoxy et isopropoxy.

11. Procédé de préparation des composés selon l'une quelconque des revendications 6 à 10, **caractérisé en ce que**, lorsque x = 2, lesdits composés sont obtenus par réaction d'un halogénure de disulfure de formule :
(G²)_{b}(G¹)_{3-b}Si-R¹-S-S-Hal (III)
dans laquelle G², G¹, b er R¹ sont tels que définis supra et Hal représente halogène, sur l'amine appropriée de formule :
HNR²R³ (IV)
dans laquelle R² et R³ sont tels que définis supra, en présence d'une base.

12. Procédé de préparation des composés selon l'une quelconque des revendications 6 à 10, **caractérisé en ce que**, lorsque x = 2, lesdits composés sont obtenus par réaction d'un disulfure de formule:
(G²)_{b}(G¹)_{3-b}Si-R¹-S-S-J (V)
dans laquelle G², G¹, b et R¹ sont tels que définis supra et J repésente le groupe succinimido ou phtalimido éventuellement substitué, sur l'amine HNR²R³ (IV) définie supra, en présence d'une base.

13. Procédé de préparation des composés selon l'une quelconque des revendications 6 à 10, **caractérisé en ce que**, lorsque x = 2, lesdits composés sont obtenus par réaction d'un aminosulfure de formule :
J-S-NR²R³ (VI)
dans laquelle R², R³ et J sont tels que définis supra, avec un thiol de formule :
(G²)_{b}(G¹)_{3-b}Si-R¹-SH (VII)
dans laquelle G², G¹, b et R¹ sont tels que définis supra, en présence d'une base.

14. Procédé de préparation des composés selon l'une quelconque des revendications 6 à 10, **caractérisé en ce que**, lorsque x = 3, lesdits composés sont obtenus en enchaînant les étapes suivantes :
(1) réaction du thiol de formule (G²)_{b}(G¹)_{3-b}Si-R¹-SH (VII) avec S₂(Hal)₂ où Hal représente un atome d'halogène, en présence d'une base, pour donner :
(G²)_{b}(G¹)_{3-b}Si-R¹-S-S-S-Hal (XII)
cette réaction étant mise en euvre dans un éther à une température de -78 à 50°C ;
(2) réaction du composé (XII) sur l'amine appropriée de formule HNR²R³ (IV) en présence d'une base.

15. Procédé de préparation des composés selon l'une quelconque des revendications 6 à 10, **caractérisé en ce que**, lorsque x = 4, lesdits composés sont obtenus en enchaînant les étapes suivantes :
(1) réaction de l'halogénure de disulfure de formule (G²)_{b}(G¹)_{3-b}Si-R¹-S-S-Hal (III) ou de l'halogénure de trisulfure de formule (G²)_{b}(G¹)_{3-b}Si-R¹-S-S-S-Hal (XII) avec la quantité requise de soufre élémentaire en opérant à une température allant de 70°C à 170°C, en présence éventuellement d'un solvant aromatique, pour donner le composé de formule :
(G²)_{b}(G¹)_{3-b}Si-R¹-S-S-S-S-Hal (XIII)
(2) réaction du composé de formule (XIII) sur l'amine appropriée de formule HNR²R³ (IV) en présence d'une base.

16. Utilisation d'une quantité efficace :
• (i) d'au moins un composé organosilicique ayant un ou plusieurs groupe(s) à fonction polythiosulfénamide de formule (I) selon l'une quelconque des revendications 1 à 5, ou (2i) d'au moins un silane polyfonctionnel répondant à la formule (II) selon l'une quelconque des revendications 6 à 10,
• comme agent de couplage charge blanche-élastomère,
• dans les compositions comprenant au moins un élastomère diénique et une charge blanche à titre de charge renforçante, compositions destinées à la fabrication d'articles à base d'un ou plusieurs élastomère(s) diénique(s).

17. Compositions à base d'un ou plusieurs d'élastomère(s) diénique(s) comprenant une charge blanche renforçante, obtenues grâce à l'emploi d'une quantité efficace (i) d'au moins un composé organosilicique porteur d'un ou plusieurs groupe(s) à fonction polythiosulfénamide de formule (I) selon l'une quelconque des revendications 1 à 5, ou (2i) d'au moins un silane polyfonctionnel répondant à la formule (II) selon l'une quelconque des revendications 6 à 10.

18. Compositions selon la revendication 17, **caractérisées en ce qu'**elles comprennent (les parties sont données en poids) :
• pour 100 parties d'un ou plusieurs élastomère(s) diénique(s),
• 10 à 200 parties de charge blanche renforçante, et
• 1 à 20 parties d'un ou plusieurs agent(s) de couplage.

19. Compositions selon la revendication 18, **caractérisées en ce qu'**elles comprennent :
• pour 100 parties d'un ou plusieurs élastomère(s) diénique(s),
• 20 à 150 parties de charge blanche renforçante, et
• 2 à 20 parties d'un ou plusieurs agent(s) de couplage.

20. Compositions selon l'une quelconque des revendications 17 à 19 **caractérisées en ce que** la charge blanche renforçante consiste dans la silice, l'alumine ou un mélange de ces deux espèces.

21. Compositions selon la revendication 20, **caractérisées en ce que** :
• la silice est une silice de précipitation, classique ou hautement dispersible, présentant une surface BET ≤ à 450 m²/g ;
• l'alumine est une alumine hautement dispersible, présentant une surface BET allant de 30 à 400 m²/g et un taux élevé de fonction réactive de surface AI-OH.

22. Compostions selon l'une quelconque des revendications 17 à 21, **caractérisées en ce que** le (ou les) élastomère(s) diénique(s) est (sont) choisi(s) parmi :
(1) les homopolyères obtenus par polymérisation d'un monomère diène conjugué ayant de 4 à 22 atomes de carbone ;
(2) les copolymères obtenus par copolymérisation d'au moins deux des diènes conjugués précipités entre eux ou par copolymérisation d'un ou plusieurs des diènes conjugués précités avec un ou plusieurs nomomères insaturés éthyléniquement choisi parmi :
- les monomères vinyles aromatiques ayant de 8 à 20 atomes de carbone ;
- les monomères nitriles vinyliques ayant de 3 à 12 atomes de carbone ;
- les monomères esters acryliques dérivés de l'acide acrylique ou de l'acide méthacrylique avec des alcanols ayant de 1 à 12 atomes de carbone ;
les copolymères peuvent contenir entre 99% et 20% en poids d'unités diéniqes et entre 1% et 80% en poids d'unités vinyles aromatiques, nitriles vinyliques et/ou esters acryliques ;
(3) les copolmères ternaires obtenus par copolymérisatin d'éthylène, d'une α-oléfine ayant 3 à 6 atomes de carbone avec un monomère diène non conjugué ayant de 6 à 12 atomes de carbone ;
(4) le caoutchouc naturel ;
(5) les copolymères obtenus par copolymérisation d'isobutène et d'isoprène, ainsi que les versions halogénées de ces copolymères ;
(6) un mélange de plusieurs des élastomères précités (1) à (5) entre eux.

23. Compositions selon la revendication 22, **caractérisées en ce que** l'on fait appel à un ou plusieurs élastomère(s) choisi(s) parmi : (1) le polybutadiène, le polychloroprène, le polyisoprène [ou poly(méthyl-2 butadiène-1,3)] ; (2) le poly(isoprène-butadiène), le poly(isoprène-styrène), le poly(isoprène-butadiène-styrène), le poly(butadiène-styrène), le poly(butadiène-acrylonitrile) ; (4) le caoutchouc naturel ; (5) les copolymères obtenus par copolymérisation d'isobutène et d'isoprène ; (6) un mélange des élastomères nommément précités (1), (2), (4), (5) entre eux ; (6') un mélange contenant une quantité majoritaire (allant de 51 % à 99,5 % en poids) de polyisoprène (1) et/ou de caoutchouc naturel (4) et une quantité minoritaire (allant de 49 % à 0,5 % en poids) de polybutadiène, de polychloroprène, de poly(butadiène-styrène) et/ou de poly(butadiène-acrylonitrile) ; (6") un mélange contenant une quantité majoritaire (allant de 51 % à 99,5 % et, de préférence, de 60 % à 99 % en poids) de poly(butadiène-styrène) (2) et une quantité minoritaire (allant de 49 % à 0,5 % et, de préférence, de 40 % à 1 % en poids) de polybutadiène (1) et/ou de polychloroprène (1).

24. compositions selon l'une quelconque des revendications 17 à 23 **caractérisées en ce qu'**elles contiennent en outre tout ou partie des autres constituants et additifs auxiliaires habituellement utilisés dans le domaine des compositions d'élastomères et de caoutchoucs, lesdits autres constituants et additifs comprenant :
• s'agissant du système de vulcanisation :
- des agents de vulcanisation choisis parmi le soufre ou des composés donneurs de soufre ;
- des accélérateurs de vulcanisation ;
- des activateurs de vulcanisation ;
• s'agissant des autres additifs :
- une charge renforçante conventionnelle consistant dans le noir de carbone ;
- une charge blanche conventionnelle peu ou non renforçante ;
- des agents antioxydants ;
- des agents antiozonants ;
- des agents de plastification et des agents d'aide à la mise en oeuvre.

25. Procédé de préparation des compositions à base d'un ou plusieurs élastmère(s) diénique(s) selon l'une quelconque des revendications 17 à 24, **caractérisé en ce que** :
• on introduit et malaxe dans un mélangeur interne usuel, en une ou deux étapes, tous les constituants nécessaires à l'exception du (ou des) agent(s) de vulcanisation et éventuellement : du (ou des) accélérateurs de vulcanisation et/ou du (ou des) activateur(s) de vulcanisatioin, en opérant à une température allant de 80°C à 200°C ;
• puis le mélange ainsi obtenu est repris ensuite sur un mélangeur externe et on y ajoute alors le (ou les) agent(s) de vulcanisation et/ou le (ou les) activateur(s) de vulcanisation, on opérant à une température plus basse, inférieure à 120°C.

26. Articles en élastomères **caractérisés en ce qu'**ils possèdent un corps comprenant une composition selon l'une quelconque des revendications 17 à 24.

27. Articles selon la revendication 26, **caractérisés en ce qu'**ils consistent dans des supports de moteurs, des semelles de chaussures, des galets de téléphérique, des joints d'appareillages éléctroménagers et des gaines de câbles.

## Claims

1. Organosilicon compound comprising, per molecule, linked to silicon atoms, on the one hand, a function Y consisting of at least one hydroxyl group or a hydrolysable monovalent group, and, on the other hand, a function X capable of reacting with a rubber elastomer, said organosilicon compound being **characterized in that** the function X consists of at least one polythiosulfenamide functional group of formula:
-R¹-Sₓ-NR²R³ (I)
in which:
• the free valency is linked to a silicon atom of the organosilicon compound;
• the symbol R¹ represents a divalent radical chosen from: a saturated or unsaturated aliphatic hydrocarbon-based group; a saturated, unsaturated and/or aromatic, monocyclic or polycyclic carbocyclic group; and a group containing a saturated or unsaturated aliphatic hydrocarbon-based portion and a carbocyclic portion as defined above; said divalent radical being optionally substituted or interrupted with an oxygen atom and/or a nitrogen atom bearing 1 or 2 monovalent groups chosen from: a hydrogen atom; a saturated or unsaturated aliphatic hydrocarbon-based group; a saturated, unsaturated and/or aromatic, monocyclic or polycyclic carbocyclic group; and a group containing a saturated or unsaturated aliphatic hydrocarbon-based portion and a carbocyclic portion as defined above;
• x is an integer or fractional number ranging from 2 to 4;
• one of the substituents of the nitrogen atom, R² or R³, represents: a hydrogen atom; a saturated aliphatic hydrocarbon-based group; a saturated and/or aromatic, monocyclic or polycyclic carbocyclic group; or a group containing a saturated aliphatic hydrocarbon-based portion and a saturated and/or aromatic, monocyclic or polycylic carbocyclic portion;
• the other substituent of the nitrogen atom, R³ or R², respectively, represents: a saturated aliphatic hydrocarbon-based group containing at least 3 carbon atoms; a saturated and/or aromatic, monocyclic or polycyclic carbocyclic group; or a group containing a saturated aliphatic hydrocarbon-based portion comprising any number of carbon atoms and a saturated and/or aromatic, monocyclic or polycyclic carbocyclic portion;
• the substituents R² and R³ may, in addition, together and with the nitrogen atom to which they are bonded, form a single ring having 5 to 7 chain members, comprising 3 to 6 carbon atoms, at least 1 nitrogen atom and optionally 1 or 2 unsaturated double bond(s) in the ring.

2. Compound according to Claim 1, **characterized in that** the polythiosulfenamide group corresponds to the formula (I) in which:
• R¹ represents: a C₁-C₈ alkylene chain; a saturated C₅-C₁₀ cycloalkylene group; a C₆-C₁₈ arylene group; or a divalent group consisting of a combination of at least two of these radicals;
• x is an integer or fraction ranging from 2 to 4;
• R² (or R³) represents: a hydrogen atom; a linear or branched C₁-C₈ alkyl radical; a C₅-C₁₀ cycloalkyl radical; a C₆-C₁₈ aryl radical; or a (C₆-C₁₈)aryl(C₁-C₈) alkyl radical;
• R³ (or R²) represents: a linear or branched C₃-C₈ alkyl radical; a C₅-C₁₀ cycloalkyl radical, a C₆-C₁₈ aryl radical or a (C₆-C₁₈) aryl (C₁-C₈) alkyl radical,
• R² and R³ may also form, together with the nitrogen atom to which they are attached, a single ring chosen from pyrrole, imidazole and pyrazole.

3. Compound according to Claim 1, **characterized in that** the polythiosulfenamide group corresponds to formula (I) in which:
• R¹ represents: a C₁-C₈ alkylene chain; a saturated C₅-C₁₀ cycloalkylene group; a C₆-C₁₈ arylene group; or a divalent group consisting of a combination of at least two of these radicals;
• x is an integer or fraction ranging from 2 to 4;
• R² (or R³) represents: a hydrogen atom; a linear or branched C₁-C₈ alkyl radical; a C₅-C₁₀ cycloalkyl radical; or a (C₆-C₁₂)aryl(C₁-C₈)alkyl radical;
• R³ (or R²) represents: a linear or branched C₃-C₈ alkyl radical; a C₅-C₁₀ cycloalkyl radical, or a (C₆-C₁₂) aryl (C₁-C₈) alkyl radical.

4. Compound according to Claim 1, **characterized in that** the polythiosulfenamide group corresponds to formula (I) in which:
• R¹ represents a C₁-C₈ alkylene chain;
• x is an integer or fraction ranging from 2 to 3;
• the symbol R² (or R³) is chosen from the group formed by hydrogen and methyl, ethyl, propyl, isopropyl, n-butyl, isobutyl, t-butyl, pentyl, hexyl, cyclohexyl and benzyl radicals,
• the symbol R³ (or R²) is chosen from the group formed by propyl, isopropyl, n-butyl, isobutyl, t-butyl, pentyl, hexyl, cyclohexyl and benzyl radicals.

5. Compound according to Claim 1, **characterized in that** the polythiosulfenamide group corresponds to formula (I) in which:
• the symbol R¹ is chosen from the group formed by divalent methylene, ethylene and propylene radicals;
• x is a number equal to 2;
• the symbol R² (or R³) is chosen from the group formed by hydrogen and methyl, ethyl, propyl, isopropyl, cyclohexyl and benzyl radicals;
• the symbol R³ (or R²) is chosen from the group formed by propyl, isopropyl, cyclohexyl and benzyl radicals.

6. Compound according to Claim 1, **characterized in that** it is chosen from polyfunctional silanes corresponding to the general formula.
(G²)_{b}(G¹)_{3-b}Si-R¹-Sₓ-NR²R³ (II)
in which:
• b represents a number chosen from 1, 2 and 3;
• the symbols G¹, which may be identical or different, each represent: a saturated or unsaturated aliphatic hydrocarbon-based group; a saturated, unsaturated and/or aromatic, monocyclic or polycyclic carbocyclic group; or a group containing a saturated or unsaturated aliphatic hydrocarbon-based portion and a carbocyclic portion as defined above;
• the symbols G², which may be identical or different, each represent: a hydroxyl group or a hydrolysable monovalent group;
• R¹, x, R² and R³ take the general definitions given above in Claim 1 with respect to the formula (I).

7. Compound according to Claims 6 and 2, **characterized in that** it is chosen from polyfunctional silanes of formula (II) in which:
• R¹, x, R² and R³ take the specific definitions given above in Claim 2;
• b represents a number chosen from 1, 2 and 3;
• the symbols G¹, which may be identical or different, each represent: a linear or branched C₁-C₈ alkyl radical; a C₅-C₁₀ cycloalkyl radical or a C₆-C₁₈ aryl radical;
• the symbols G², which may be identical or different, each represent: a linear or branched C₁-C₈ alkoxy radical, optionally substituted with one or more (C₁-C₈)alkoxy groups.

8. Compound according to Claims 6 and 3, **characterized in that** it is chosen from the polyfunctional silanes of formula (II) in which:
• R¹, x, R² and R³ take the specific definitions given above in Claim 3;
• b represents a number chosen from 1, 2 and 3;
• the symbols G¹, which may be identical or different, each represent: a linear or branched C₁-C₈ alkyl radical; a C₅-C₁₀ cycloalkyl radical or a C₆-C₁₈ aryl radical;
• the symbols G², which may be identical or different, each represent: a linear or branched C₁-C₈ alkoxy radical, optionally substituted with one or more (C₁-C₈)alkoxy.

9. Compound according to Claims 6 and 4, **characterized in that** it is chosen from the polyfunctional silanes of formula (II) in which:
• R¹, x, R² and R³ take the specific definitions given above in Claim 4;
• b represents a number chosen from 1, 2 and 3;
• the symbols G¹, which may be identical or different, are chosen from the group formed by the methyl, ethyl, propyl, isopropyl, cyclohexyl and phenyl radicals;
• the symbols G², which may be identical or different, are chosen from the group formed by the methoxy, ethoxy, n-propoxy, isopropoxy, methoxymethoxy, ethoxyethoxy and methoxyethoxy radicals.

10. Compound according to Claims 6 and 5, **characterized in that** it is chosen from the polyfunctional silanes of formula (II) in which:
• R¹, x, R² and R³ take the specific definitions given above in Claim 5;
• b represents a number equal to 3;
• the symbols G², which are identical, are chosen from the group formed by the methoxy, ethoxy, n-propoxy and isopropoxy radicals.

11. Process for preparing the compounds according to any one of Claims 6 to 10, **characterized in that**, when x = 2, said compounds are obtained by reacting a disulfide halide of formula:
(G²)_{b}(G¹)_{3-b}Si-R¹-S-S-Hal (III)
in which G², G¹, b and R¹ are as defined above and Hal represents a halogen atom, with the appropriate amine of formula:
HNR²R³ (IV)
in which R² and R³ are as defined above, in the presence of a base.

12. Process for preparing the compounds according to any one of Claims 6 to 10, **characterized in that**, when x = 2, said compounds are obtained by reacting a disulfide of formula:
(G²)_{b}(G¹)_{3-b}Si-R¹-S-S-J (V)
in which G², G¹, b and R¹ are as defined above and J represents an optionally substituted succinimido or phthalimido group, with the amine HNR²R³ (IV) defined above, in the presence of a base.

13. Process for preparing the compounds according to any one of Claims 6 to 10, **characterized in that**, when x = 2, said compounds are obtained by reacting an amino sulfide of formula:
J-S-NR²R³ (VI)
in which R², R³ and J are as defined above, with a thiol of formula:
(G²)_{b}(G¹)_{3-b}Si-R¹-SH (VII)
in which G², G¹, b and R¹ are as defined above, in the presence of a base.

14. Process for preparing the compounds according to any one of Claims 6 to 10, **characterized in that**, when x = 3, said compounds are obtained by performing the following sequence of steps:
(1) reaction of the thiol of formula (G²)_{b}(G¹)_{3-b}Si-R¹-SH (VII) with S₂(Hal)₂ in which Hal represents a halogen atom, in the presence of a base, to give:
(G²)_{b}(G¹)_{3-b}Si-R¹-S-S-S-Hal (XII)
this reaction being performed in an ether at a temperature of from -78 to 50°C;
(2) reaction of compound (XII) with the appropriate amine of formula HNR²R³ (IV) in the presence of a base.

15. Process for preparing the compounds according to any one of Claims 6 to 10, **characterized in that**, when x = 4, said compounds are obtained by performing the following sequence of steps:
(1) reaction of a disulfide halide of formula (G²)_{b}(G¹)_{3-b}Si-R¹-S-S-Hal (III) or of the trisulfide halide of formula (G²)_{b}(G¹)_{3-b}Si-R¹-S-S-S-Hal (XII) with the required amount of elementary sulfur, working at a temperature ranging from 70°C to 170°C, optionally in the presence of an aromatic solvent, to give the compound of formula:
(G²)_{b}(G¹)_{3-b}Si-R¹-S-S-S-S-Hal (XIII)
(2) reaction of the compound of formula (XIII) with the appropriate amine of formula HNR²R³ (IV) in the presence of a base.

16. Use of an effective amount:
• (i) of at least one organosilicon compound having one or more group(s) containing a polythiosulfenamide function of formula (I) according to any one of Claims 1 to 5, or (2i) of at least one polyfunctional silane corresponding to formula (II) according to any one of Claims 6 to 10,
• as a white filler-elastomer coupling agent,
• in compositions comprising at least one diene elastomer and a white filler as reinforcing filler, these compositions being intended for manufacturing articles made from one or more diene elastomer(s).

17. Compositions based on one or more diene elastomer(s) comprising a reinforcing white filler, obtained by using an effective amount (i) of at least one organosilicon compound bearing group(s) containing a polythiosulfenamide function of formula (I) according to any one of Claims 1 to 5, or (2i) of at least one polyfunctional silane corresponding to the formula (II) according to any one of Claims 6 to 10.

18. Compositions according to Claim 17, **characterized in that** they comprise (the parts are given on a weight basis):
• per 100 parts of one or more diene elastomer(s),
• 10 to 200 parts of one or more reinforcing white filler, and
• 1 to 20 parts of one or more coupling agent(s).

19. Compositions according to Claim 18, **characterized in that** they comprise:
• per 100 parts of one or more diene elastomer(s),
• 20 to 150 parts of one or more reinforcing white filler, and
• 2 to 20 parts of coupling agent(s).

20. Compositions according to any one of Claims 17 to 19, **characterized in that** the reinforcing white filler consists of silica, alumina or a mixture of these two species.

21. Compositions according to Claim 20, **characterized in that**:
• the silica is a standard or highly dispersible precipitation silica with a BET surface area of 450 m²/g;
• the alumina is a highly dispersible alumina with a BET surface area ranging from 30 to 400 m²/g and a high content of Al-OH reactive surface functions.

22. Compositions according to any one of Claims 17 to 21, **characterized in that** the diene elastomer(s) is (are) chosen from:
(1) homopolymers obtained by polymerization of a conjugated diene monomer containing from 4 to 22 carbon atoms;
(2) copolymers obtained by copolymerization of at least two of the precipitated conjugated dienes with each other or by copolymerization of one or more of the abovementioned conjugated dienes with one or more ethylenically unsaturated monomers chosen from:
- vinylaromatic monomers containing from 8 to 20 carbon atoms;
- vinyl nitrile monomers containing from 3 to 12 carbon atoms;
- acrylic ester monomers derived from acrylic acid or from methacrylic acid with alkanols containing from 1 to 12 carbon atoms;
the copolymers may contain between 99% and 20% by weight of diene units and between 1% and 80% by weight of vinylaromatic, vinyl nitrile and/or acrylic ester units;
(3) ternary copolymers obtained by copolymerization of ethylene or of an α-olefin containing 3 to 6 carbon atoms with a nonconjugated diene monomer containing from 6 to 12 carbon atoms;
(4) natural rubber;
(5) copolymers obtained by copolymerization of isobutene and isoprene, and also the halogenated versions of these copolymers;
(6) a blend of several of the abovementioned elastomers (1) to (5) with each other.

23. Compositions according to Claim 22, **characterized in that** use is made of one or more elastomer(s) chosen from: (1) polybutadiene, polychloroprene or polyisoprene [or poly(2-methyl-1,3-butadiene)]; (2) poly(isoprene-butadiene), poly(isoprene-styrene), poly(isoprene-butadiene-styrene), poly(butadienestyrene) or poly(butadiene-acrylonitrile); (4) natural rubber; (5) copolymers obtained from copolymerization of isobutene and isoprene; (6) a blend of elastomers, especially the abovementioned elastomers (1), (2), (4) and (5) with each other; (6') a blend containing a majority amount (ranging from 51% to 99.5% by weight) of polyisoprene (1) and/or of natural rubber (4) and a minority amount (ranging from 49% to 0.5% by weight) of polybutadiene, polychloroprene, poly(butadiene-styrene) and/or poly(butadiene-acrylonitrile); (6") a blend containing a majority amount (ranging from 51% to 99.5% and preferably from 60% to 99% by weight) of poly(butadiene-styrene) (2) and a minority amount (ranging from 49% to 0.5% and preferably from 40% to 1% by weight) of polybutadiene (1) and/or of polychloroprene (1).

24. Compositions according to any one of Claims 17 to 23, **characterized in that** they also contain all or some of the other auxiliary constituents and additives usually used in elastomer and rubber compositions, said other constituents and additives comprising:
• when it is a vulcanization system:
- vulcanizing agents chosen from sulfur and sulfurdonating compounds;
- vulcanization accelerators;
- vulcanization activators;
• when it is other additives:
- a conventional reinforcing filler consisting of carbon black;
- a conventional white filler with little or no reinforcing nature;
- antioxidants;
- antiozonizers;
- plasticizers and processing agents.

25. Process for preparing compositions based on one or more diene elastomer(s) according to any one of Claims 17 to 24, **characterized in that**:
• all the required constituents with the exception of the vulcanizing agent(s) and optionally: of the vulcanization accelerator(s) and/or of the vulcanization activator(s), are introduced into and blended in a standard internal mixer, in one or two steps, working at a temperature ranging from 80°C to 200°C;
• the blend thus obtained is then taken up in an external mixer and the vulcanizing agent(s) and/or the vulcanization activator(s) is (are) then added thereto, working at a lower temperature, below 120°C.

26. Elastomer articles, **characterized in that** they have a body comprising a composition according to any one of Claims 17 to 24.

27. Articles according to Claim 26, **characterized in that** they consist of engine blocks, shoe soles, rollers for cable cars, seals for household electrical appliances and cable sheaths.

## Patentansprüche

1. Organosilicium-Verbindung, umfassend pro Molekül, gebunden an Siliciumatome, einerseits eine Funktion Y, bestehend aus mindestens einer Hydroxylgruppe oder einer hydrolysierbaren monovalenten Gruppe, und andererseits eine Funktion X, die fähig ist, mit einem Kautschuk-Elastomer zu reagieren, wobei die genannte Organosilicium-Verbindung **dadurch gekennzeichnet ist, daß** die Funktion X aus mindestens einer funktionellen Polythiosulfenamid-Gruppe der Formel 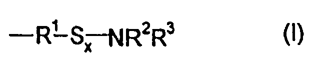 besteht, in der
■ die freie Valenz an ein Siliciumatom der Organosilicium-Verbindung gebunden ist;
■ das Symbol R¹ einen divalenten Rest darstellt, ausgewählt unter: einer aliphatischen, gesättigten oder ungesättigten Kohlenwasserstoff-Gruppe; einer gesättigten, ungesättigten und/ oder aromatischen, monocyclischen oder polycyclischen carbocyclischen Gruppe; und einer Gruppe, die einen aliphatischen, gesättigten oder ungesättigten Kohlenwasserstoff-Teil und einen wie oben definierten carbocyclischen Teil aufweist; wobei der genannte divalente Rest gegebenenfalls substituiert oder durch ein Sauerstoffatom und/oder ein Stickstoffatom unterbrochen ist, das seinerseits 1 bis 2 monovalente Gruppen trägt, ausgewählt unter: einem Wasserstoffatom; einer aliphatischen, gesättigten oder ungesättigten Kohlenwasserstoff-Gruppe, einer gesättigten, ungesättigten und/oder aromatischen, monocyclischen oder polycyclischen carbocyclischen Gruppe; und einer Gruppe, die einen aliphatischen, gesättigten oder ungesättigten Kohlenwasserstoff-Teil und einen wie oben definierten carbocyclischen Teil aufweist;
■ x eine ganze oder gebrochene Zahl darstellt, die von 2 bis 4 reicht;
■ einer der Substituenten des Stickstoffatoms, R² oder R³, darstellt: ein Wasserstoffatom; eine aliphatische gesättigte Kohlenwasserstoff-Gruppe; eine gesättigte und/oder aromatische, monocyclische oder polycyclische carbocyclische Gruppe; oder eine Gruppe, die einen aliphatischen gesättigten Kohlenwasserstoff-Teil und einen gesättigten und/oder aromatischen, monocyclischen oder polycyclischen carbocyclischen Teil aufweist;
■ der andere Substituent des Stickstoffatoms, jeweils R³ oder R², darstellt: eine gesättigte aliphatische Kohlenwasserstoff-Gruppe mit mindestens drei Kohlenstoffatomen; eine gesättigte und/oder aromatische, monocyclische oder polycyclische carbocyclische Gruppe; oder eine Gruppe, die einen aliphatischen gesättigten Kohlenwasserstoff-Teil darstellt, umfassend irgendeine Anzahl von Kohlenstoffatomen und einen gesättigten und/oder aromatischen, monocyclischen oder polycyclischen carbocyclischen Teil;
■ wobei die Substituenten R² und R³ außerdem zusammen und mit dem Stickstoffatom, an das sie gebunden sind, einen einzigen Ring mit 5 bis 7 Kettengliedern bilden können, der in dem Ring 3 bis 6 Kohlenstoffatome, mindestens ein Stickstoffatom und gegebenenfalls 1 oder 2 ungesättigte Doppelbindung(en) umfaßt.

2. Verbindung nach Anspruch 1, **dadurch gekennzeichnet, daß** die Gruppe Polythiosulfenamid der Formel (I) entspricht, in der
■ R¹ darstellt: eine Kette Alkylen mit 1 bis 8 Kohlenstoffatomen; eine gesättigte Gruppe Cycloalkylen mit 5 bis 10 Kohlenstoffatomen; eine Gruppe Arylen mit 6 bis 18 Kohlenstoffatomen; oder eine divalente Gruppe, bestehend aus einer Kombination von mindestens zwei dieser Reste;
■ x eine ganze oder gebrochene Zahl darstellt, die von 2 bis 4 reicht;
■ R² (oder R³) darstellt: ein Wasserstoffatom; einen linearen oder verzweigten Rest Alkyl mit 1 bis 8 Kohlenstoffatomen; einen Rest Cycloalkyl mit 5 bis 10 Kohlenstoffatomen; einen Rest Aryl mit 6 bis 18 Kohlenstoffatomen; oder einen Rest (C₆-C₁₈)Aryl-(C₁-C₈)-alkyl;
■ R³ (oder R²) darstellt: einen linearen oder verzweigten Rest Alkyl mit 3 bis 8 Kohlenstoffatomen; einen Rest Cycloalkyl mit 5 bis 10 Kohlenstoffatomen; einen Rest Aryl mit 6 bis 18 Kohlenstoffatomen; oder einen Rest (C₆-C₁₈)Aryl- (C₁-C₈)-alkyl;
■ R² und R³ außerdem zusammen mit dem Stickstoffatom, an das sie gebunden sind, einen einzigen Ring bilden können, ausgewählt unter Pyrrol, Imidazol und Pyrazol.

3. Verbindung nach Anspruch 1, **dadurch gekennzeichnet, daß** die Gruppe Polythiosulfenamid der Formel (I) entspricht, in der
■ R¹ darstellt: eine Kette Alkylen mit 1 bis 8 Kohlenstoffatomen; eine gesättigte Gruppe Cycloalkylen mit 5 bis 10 Kohlenstoffatomen; eine Gruppe Arylen mit 6 bis 18 Kohlenstoffatomen; oder eine divalente Gruppe, bestehend aus einer Kombination von mindestens zwei dieser Reste;
■ x eine ganze oder gebrochene Zahl darstellt, die von 2 bis 4 reicht;
■ R² (oder R³) darstellt: ein Wasserstoffatom; einen linearen oder verzweigten Rest Alkyl mit 1 bis 8 Kohlenstoffatomen; einen Rest Cycloalkyl mit 5 bis 10 Kohlenstoffatomen; oder einen Rest (C₆-C₁₂)Aryl-(C₁-C₈)-alkyl;
■ R³ (oder R²) darstellt: einen linearen oder verzweigten Rest Alkyl mit 3 bis 8 Kohlenstoffatomen; einen Rest Cycloalkyl mit 5 bis 10 Kohlenstoffatomen; oder einen Rest (C₆-C₁₂)Aryl-(C₁-C₈)-alkyl.

4. Verbindung nach Anspruch 1, **dadurch gekennzeichnet, daß** die Gruppe Polythiosulfenamid der Formel (I) entspricht, in der
■ R¹ eine Kette Alkylen mit 1 bis 8 Kohlenstoffatomen darstellt;
■ x eine ganze oder gebrochene Zahl darstellt, die von 2 bis 3 reicht;
■ das Symbol R² (oder R³) aus der Gruppe gewählt wird, die gebildet wird durch Wasserstoff, die Reste Methyl, Ethyl, Propyl, Isopropyl, n-Butyl, Isobutyl, tert.-Butyl, Pentyl, Hexyl, Cyclohexyl und Benzyl;
■ das Symbol R³ (oder R²) aus der Gruppe gewählt wird, die gebildet wird durch die Reste Propyl, Isopropyl, n-Butyl, Isobutyl, tert.-Butyl, Pentyl, Hexyl, Cyclohexyl und Benzyl.

5. Verbindung nach Anspruch 1, **dadurch gekennzeichnet, daß** die Gruppe Polythiosulfenamid der Formel (I) entspricht, in der
■ das Symbol R¹ aus der Gruppe gewählt wird, die gebildet wird durch die divalenten Reste Methylen, Ethylen und Propylen;
■ x eine Zahl gleich 2 ist;
■ das Symbol R² (oder R³) aus der Gruppe gewählt wird, die gebildet wird durch Wasserstoff, die Reste Methyl, Ethyl, Propyl, Isopropyl, Cyclohexyl und Benzyl;
■ das Symbol R³ (oder R²) aus der Gruppe gewählt wird, die gebildet wird durch die Reste Propyl, Isopropyl, Cyclohexyl und Benzyl.

6. Verbindung nach Anspruch 1, **dadurch gekennzeichnet, daß** sie unter den polyfunktionellen Silanen ausgewählt wird, die der allgemeinen Formel (II) 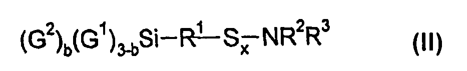 entsprechen, in der
■ b eine Zahl darstellt, ausgewählt unter 1, 2 und 3;
■ die Symbole G¹, gleich oder verschieden, jeweils darstellen: eine gesättigte oder ungesättigte aliphatische Kohlenwasserstoff-Gruppe; eine gesättigte, ungesättigte und/oder aromatische, monocyclische oder polycyclische carbocyclische Gruppe; oder eine Gruppe, die einen aliphatischen, gesättigten oder ungesättigten Kohlenwasserstoff-Teil und einen wie oben definierten carbocyclischen Teil aufweist;
■ die Symbole G², gleich oder verschieden, jeweils darstellen: eine Hydroxylgruppe oder eine hydrolysierbare monovalente Gruppe;
■ R¹, x, R² und R³ die oben in Anspruch 1 bei der Formel (I) angegebenen allgemeinen Definitionen annehmen.

7. Verbindung nach Anspruch 6 und 2, **dadurch gekennzeichnet, daß** sie unter den polyfunktionellen Silanen der Formel (II) ausgewählt wird, in der
■ R¹, x, R² und R³ die oben in Anspruch 2 angegebenen spezifischen Definitionen annehmen;
■ b eine Zahl darstellt, ausgewählt unter 1, 2 und 3;
■ die Symbole G¹, gleich oder verschieden, jeweils darstellen: einen linearen oder verzweigten Rest Alkyl mit 1 bis 8 Kohlenstoffatomen; einen Rest Cycloalkyl mit 5 bis 10 Kohlenstoffatomen oder einen Rest Aryl mit 6 bis 18 Kohlenstoffatomen;
■ die Symbole G², gleich oder verschieden, jeweils darstellen: einen linearen oder verzweigten Rest Alkoxy mit 1 bis 8 Kohlenstoffatomen, gegebenenfalls substituiert durch ein oder mehrere (C₁-C₈)-Alkoxy.

8. Verbindung nach Anspruch 6 und 3, **dadurch gekennzeichnet, daß** sie unter den polyfunktionellen Silanen der Formel (II) ausgewählt wird, in der
■ R¹, x, R² und R³ die oben in Anspruch 3 angegebenen spezifischen Definitionen annehmen;
■ b eine Zahl darstellt, ausgewählt unter 1, 2 und 3;
■ die Symbole G¹, gleich oder verschieden, jeweils darstellen: einen linearen oder verzweigten Rest Alkyl mit 1 bis 8 Kohlenstoffatomen; einen Rest Cycloalkyl mit 5 bis 10 Kohlenstoffatomen oder einen Rest Aryl mit 6 bis 18 Kohlenstoffatomen;
■ die Symbole G², gleich oder verschieden, jeweils darstellen: einen linearen oder verzweigten Rest Alkoxy mit 1 bis 8 Kohlenstoffatomen, gegebenenfalls substituiert durch ein oder mehrere (C₁-C₈)-Alkoxy.

9. Verbindung nach Anspruch 6 und 4, **dadurch gekennzeichnet, daß** sie unter den polyfunktionellen Silanen der Formel (II) ausgewählt wird, in der
■ R¹, x, R² und R³ die oben in Anspruch 4 angegebenen spezifischen Definitionen annehmen;
■ b eine Zahl darstellt, ausgewählt unter 1, 2 und 3;
■ die Symbole G¹, gleich oder verschieden, aus der Gruppe gewählt werden, die gebildet wird durch die Reste Methyl, Ethyl, Propyl, Isopropyl, Cyclohexyl und Phenyl;
■ die Symbole G², gleich oder verschieden, aus der Gruppe gewählt werden, die gebildet wird durch die Reste Methoxy, Ethoxy, n-Propoxy, Isopropoxy, Methoxymethoxy, Ethoxyethoxy und Methoxyethoxy.

10. Verbindung nach Anspruch 6 und 5, **dadurch gekennzeichnet, daß** sie unter den polyfunktionellen Silanen der Formel (II) ausgewählt wird, in der
■ R¹, x, R² und R³ die oben in Anspruch 5 angegebenen spezifischen Definitionen annehmen;
■ b eine Zahl gleich 3 darstellt;
■ die Symbole G², gleich, aus der Gruppe gewählt werden, die gebildet wird durch die Reste Methoxy, Ethoxy, n-Propoxy und Isopropoxy.

11. Verfahren zur Herstellung der Verbindungen nach irgendeinem der Ansprüche 6 bis 10, **dadurch gekennzeichnet, daß** in dem Fall, wo x = 2 ist, die genannten Verbindungen erhalten werden durch Reaktion eines Disulfid-halogenids der Formel (III)
**(G**^{**2**}**)**_{**b**}**(G**^{**1**}**)**_{**3-b**}**Si-R**^{**1**}**-S-S-Hal** **(III)**
in der G², G¹, b und R¹ wie oben definiert sind und Hal Halogen darstellt, mit einem geeigneten Amin der Formel (IV)
HNR²R³ (IV)
in der R² und R³ wie oben definiert sind, in Anwesenheit einer Base.

12. Verfahren zur Herstellung Verbindungen nach irgendeinem der Ansprüche 6 bis 10, **dadurch gekennzeichnet, daß** in dem Fall, wo x = 2 ist, die genannten Verbindungen erhalten werden durch Reaktion eines Disulfides der Formel (V)
**(G**^{**2**}**)**_{**b**}**(G**^{**1**}**)**_{**3-b**}**Si-R**^{**1**}**-S-S-J** **(V)**
in der G², G¹, b und R¹ wie oben definiert sind und J die Gruppe Succinimido oder Phthalimido, gegebenenfalls substituiert, darstellt, mit dem wie oben definierten Amin HNR²R³ (IV) in Anwesenheit einer Base.

13. Verfahren zur Herstellung von Verbindungen nach irgendeinem der Ansprüche 6 bis 10, **dadurch gekennzeichnet, daß** in dem Fall, wo
x = 2 ist, die genannten Verbindungen erhalten werden durch Reaktion eines Aminosulfides der Formel (VI)
**J-S-NR**²**R**³ **(VI)**
in der R², R³, und J wie oben definiert sind, mit einem Thiol der Formel (VII)
**(G**²**)**_{b}**(G**¹**)**_{3-b}**Si-R**¹**-SH** **(VII)**
in der G², G¹, b und R¹ wie oben definiert sind, in Anwesenheit einer Base.

14. Verfahren zur Herstellung der Verbindungen nach irgendeinem der Ansprüche 6 bis 10, **dadurch gekennzeichnet, daß** in dem Fall, wo x = 3 ist, die genannten Verbindungen erhalten werden, indem man die folgenden Stufen aneinanderreiht:
(1) Reaktion des Thiols der Formel (G²)_{b}(G¹)_{3-b}Si-R¹-SH (VII) mit S₂(Hal)₂, worin Hal ein Halogenatom darstellt, in Anwesenheit einer Base, um zu ergeben:
**(G**^{**2**}**)**_{**b**}**(G**^{**1**}**)**_{**3-b**}**Si-R**^{**1**}**-S-S-S-Hal** **(XII)**
wobei diese Reaktion in einem Ether bei einer Temperatur von -78 °C bis 50 °C durchgeführt wird;
(2) Reaktion der Verbindung (XII) mit dem geeigneten Amin der Formel HNR²R³ (IV) in Anwesenheit einer Base.

15. Verfahren zur Herstellung der Verbindungen nach irgendeinem der Ansprüche 6 bis 10, **dadurch gekennzeichnet, daß** in dem Fall, wo x = 4 ist, die genannten Verbindungen erhalten werden, indem man die folgenden Stufen aneinanderreiht:
(1) Reaktion des Disulfid-halogenids der Formel (G²)_{b}(G¹)_{3-b}Si-R¹-S-S-Hal (III) oder des Trisulfid-halogenids der Formel (G²)_{b}(G¹)_{3-b}Si-R¹-S-S-S-Hal (XII) mit der erforderlichen Menge an elementarem Schwefel, indem man bei einer Temperatur arbeitet, die von 70 °C bis 170 °C reicht, gegebenenfalls in Anwesenheit eines aromatischen Lösungsmittels, um die Verbindung der Formel (XIII) zu ergeben:
**(G**²**)**_{b}**(G**¹**)**_{3-b}**Si-R**¹**-S-S-S-S-Hal** **(XIII)**
(2) Reaktion der Verbindung der Formel (XIII) mit dem geeigneten Amin der Formel HNR²R³ (IV) in Anwesenheit einer Base.

16. Verwendung in einer wirksamen Menge
• (i) von mindestens einer Organosilicium-Verbindung mit einer oder mehreren Gruppe(n) mit Funktion Polythiosulfenamid der Formel (I) nach irgendeinem der Ansprüche 1 bis 5 oder (2i) von mindestens einem polyfunktionellen Silan, das der Formel (II) entspricht, nach irgendeinem der Ansprüche 6 bis 10,
• als Mittel zur Kopplung weißer Füllstoff-Elastomer,
• in Zusammensetzungen, die mindestens ein dienisches Elastomer und einen weißen Füllstoff als verstärkenden Füllstoff umfassen, wobei diese Zusammensetzungen zur Herstellung von Artikeln auf der Basis von einem oder mehreren dienischem(n) Elastomer(en) vorgesehen sind.

17. Zusammensetzungen auf der Basis von einem oder mehreren dienischem(n) Elastomer(en), umfassend einen weißen verstärkenden Füllstoff, erhalten durch Verwendung einer wirksamen Menge (i) von mindestens einer Organosilicium-Verbindung als Träger von einer oder mehreren Gruppe(n) mit Funktion Polythiosulfenamid der Formel (I) nach irgendeinem der Ansprüche 1 bis 5 oder (2i) von mindestens einem polyfunktionellen Silan, das der Formel (II) entspricht, nach irgendeinem der Ansprüche 6 bis 10.

18. Zusammensetzungen nach Anspruch 17, **dadurch gekennzeichnet, daß** sie umfassen (die Teile sind in Gewicht angegeben):
• pro 100 Teile von einem oder mehreren dienischem(n) Elastomer(en),
• 10 bis 200 Teile von weißem, verstärkenden Füllstoff, und
• 1 bis 20 Teile von einem oder mehreren Kopplungsmittel(n).

19. Zusammensetzungen nach Anspruch 18, **dadurch gekennzeichnet, daß** sie umfassen:
• pro 100 Teile von einem oder mehreren dienischem(n) Elastomer(en),
• 20 bis 150 Teile von weißem, verstärkenden Füllstoff, und
• 2 bis 20 Teile von einem oder mehreren Kopplungsmittel(n).

20. Zusammensetzungen nach irgendeinem der Ansprüche 17 bis 19, **dadurch gekennzeichnet, daß** der weiße, verstärkende Füllstoff aus Siliciumdioxid, Aluminiumoxid oder einer Mischung dieser beiden Arten besteht.

21. Zusammensetzungen nach Anspruch 20, **dadurch gekennzeichnet, daß**
• das Siliciumdioxid ein klassisches oder hoch dispergierbares Siliciumdioxid aus der Fällung ist, das eine spezifische Oberfläche BET ≤ 450 m²/g aufweist;
• das Aluminiumoxid ein hoch dispergierbares Aluminiumoxid ist, das eine spezifische Oberfläche BET, die von 30 bis 400 m²/g reicht, und einen hohen Gehalt an reaktiver Funktion der Oberfläche Al-OH aufweist.

22. Zusammensetzungen nach irgendeinem der Ansprüche 17 bis 21, **dadurch gekennzeichnet, daß** das oder die dienische(n) Elastomer(en) ausgewählt wird (werden) unter:
(1) den Homopolymeren, erhalten durch Polymerisation eines konjugierten Dienmonomers mit 4 bis 22 Kohlenstoffatomen;
(2) den Copolymeren, erhalten durch Copolymerisation von mindestens zwei der vorstehend genannten konjugierten Diene untereinander oder durch Copolymerisation von einem oder mehreren der vorstehend genannten konjugierten Diene mit einem oder mehreren ethylenisch ungesättigten Monomeren, ausgewählt unter:
- den aromatischen Vinyl-Monomeren mit 8 bis 20 Kohlenstoffatomen;
- den vinylischen Nitril-Monomeren mit 3 bis 12 Kohlenstoffatomen;
- den Acrylester-Monomeren, abgeleitet von Acrylsäure oder Methacrylsäure mit Alkanolen, mit 1 bis 12 Kohlenstoffatomen; wobei die Copolymeren zwischen 99 Gew.-% und 20 Gew.-% Dien-Einheiten und zwischen 1 Gew.-% und 80 Gew.-% Einheiten von aromatischem Vinyl, von vinylischem Nitril und/oder von Acrylestern enthalten können;
(3) den ternären Copolymeren, erhalten durch Copolymerisation von Ethylen, von einem α-Olefin mit 3 bis 6 Kohlenstoffatomen, mit einem nicht konjugierten Dien-Monomer mit 6 bis 12 Kohlenstoffatomen;
(4) dem natürlichen Kautschuk;
(5) den Copolymeren, erhalten durch Copolymerisation von Isobuten und Isopren sowie den halogenierten Versionen dieser Copolymere;
(6) einer Mischung von mehreren der vorstehend unter (1) bis (5) genannten Elastomeren untereinander.

23. Zusammensetzungen nach Anspruch 22, **dadurch gekennzeichnet, daß** man auf ein oder mehrere Elastomer(e) zurückgreift, ausgewählt unter: (1) Polybutadien, Polychloropren, Polyisopren [oder Poly-(2-Methyl-1,3-butadien)]; (2) Poly-(Isopren-butadien), Poly-(Isopren-styrol), Poly-(Isopren-butadien-styrol), Poly-(Butadien-styrol), Poly-(Butadien-acrylnitril); (4) natürlichem Kautschuk; (5) den Copolymeren, erhalten durch Copolymerisation von Isobuten und Isopren; (6) einer Mischung der vorstehend unter (1), (2), (4), (5) genannten Elastomeren untereinander; (6') einer Mischung, die eine in der Überzahl vorliegende Menge (reichend von 51 Gew.-% bis 99,5 Gew.-%) von Polyisopren (1) und/oder von natürlichem Kautschuk (4) und eine in der Minderheit vorliegende Menge (reichend von 49 Gew.-% bis 0,5 Gew.-%) von Polybutadien, Polychloropren, Poly-(Butadien-styrol) und/oder Poly-(Butadien-acrylnitril) enthält; (6") einer Mischung, die eine in der Überzahl vorliegende Menge (reichend von 51 Gew.-% bis 99,5 Gew.-% und vorzugsweise von 60 Gew.-% bis 99 Gew.-%) von Poly-(Butadien-styrol) (2) und eine in der Minderheit vorliegende Menge (reichend von 49 Gew.-% bis 0,5 Gew.-% und vorzugsweise von 40 Gew.-% bis 1 Gew.-%) von Polybutadien (1) und/oder Polychloropren (1) enthält.

24. Zusammensetzungen nach irgendeinem der Ansprüche 17 bis 23, **dadurch gekennzeichnet, daß** sie außerdem ganz oder teilweise andere Bestandteile oder Hilfszusatzstoffe enthalten, wie sie üblicherweise auf dem Gebiet der Zusammensetzungen von Elastomeren und Kautschuks verwendet werden, wobei diese anderen Bestandteile und Zusatzstoffe umfassen:
• wenn es sich um ein System zur Vulkanisierung handelt:
- Vulkanisierungsmittel, ausgewählt unter Schwefel oder Verbindungen, die Schwefel abgeben;
- Vulkanisierungsbeschleuniger;
- Vulkanisierungsaktivatoren;
• wenn es sich um andere Zusatzstoffe handelt:
- einen üblichen verstärkenden Füllstoff, besteht aus Kohlenruß;
- einen wenig oder nicht verstärkenden üblichen weißen Füllstoff;
- Antioxidationsmittel;
- Antiozonierungsmittel;
- Weichmacher und Hilfsstoffe für die Anwendung.

25. Verfahren zur Herstellung der Zusammensetzungen auf der Basis von einem oder mehreren dienischem(n) Elastomer(en) nach irgendeinem der Ansprüche 17 bis 24, **dadurch gekennzeichnet, daß** man
• in einen üblichen Innenmischer in einer oder in zwei Stufen alle erforderlichen Bestandteile, mit Ausnahme von dem oder den Vulkanisierungsmittel(n) und gegebenenfalls dem oder den Vulkanisierungsbeschleuniger(n) und/oder dem oder den Vulkanisierungsaktivator(en), einträgt und vermischt, wobei man bei einer Temperatur arbeitet, die von 80 °C bis 200 °C reicht;
• anschließend die auf diese Weise erhaltene Mischung in einen externen Mischer einbringt und dann dort das oder die Vulkanisierungsmittel und/oder den oder die Vulkanisierungsaktivator(en) hinzufügt, wobei man bei einer niedrigeren Temperatur von unter 120 °C arbeitet.

26. Artikel aus Elastomeren, **dadurch gekennzeichnet, daß** sie einen Korpus besitzen, der eine Zusammensetzung nach irgendeinem der Ansprüche 17 bis 24 umfaßt.

27. Artikel nach Anspruch 26, **dadurch gekennzeichnet, daß** sie aus Motorhalterungen, Schuhsohlen, Rollen für Seilbahnen, Dichtungen für Haushaltsgeräte und Kabelumhüllungen bestehen.
